(19) Europäisches Patentamt
European Patent Office
Office européen des brevets

(11) EP 1 616 227 B1

(12) EUROPÄISCHE PATENTSCHRIFT

(45) Veröffentlichungstag und Bekanntmachung des Hinweises auf die Patenterteilung:
**28.03.2007  Patentblatt 2007/13**

(51) Int Cl.:
**G05B 19/418** (2006.01)

(21) Anmeldenummer: **04713462.2**

(22) Anmeldetag: **21.02.2004**

(86) Internationale Anmeldenummer:
**PCT/EP2004/001732**

(87) Internationale Veröffentlichungsnummer:
**WO 2004/090650 (21.10.2004 Gazette 2004/43)**

(54) **VERFAHREN UND VORRICHTUNG ZUR STEUERUNG UND PLANUNG EINER FERTIGUNGSREIHENFOLGE UNTER BERÜCKSICHTIGUNG VON KUNDENAUFTRÄGEN**

METHOD AND DEVICE FOR CONTROLLING AND PLANNING THE ORDER OF PRODUCTION TAKING INTO CONSIDERATION CUSTOMER ORDERS

PROCEDE ET DISPOSITIF POUR LE CONTROLE ET LE PLANIFICATION DE LA SEQUENCE DE PRODUCTION TENANT COMPTE DES COMMANDES DES CLIENTS

(84) Benannte Vertragsstaaten:
**DE FR GB IT**

(30) Priorität: **09.04.2003  DE 10316102**

(43) Veröffentlichungstag der Anmeldung:
**18.01.2006  Patentblatt 2006/03**

(73) Patentinhaber: **DaimlerChrysler AG
70567 Stuttgart (DE)**

(72) Erfinder:
• **DAFERNER, Martin
71065 Sindelfingen (DE)**
• **SUPPER, Reiner
71063 Sindelfingen (DE)**

(56) Entgegenhaltungen:
**DE-A- 19 815 619        DE-A- 19 927 563
DE-C- 19 902 056        US-B1- 6 546 302**

**Beschreibung**

Die Erfindung betrifft ein Verfahren und eine Vorrichtung zur automatischen Steuerung eines Fertigungsprozesses zur Serienfertigung auftragsspezifischer Produkte. Die auftragsspezifischen Produkte sind beispielsweise Kraftfahrzeuge, die aufgrund von Kundenaufträgen hergestellt werden und sich in vielen Merkmalen voneinander unterscheiden. Der Fertigungsprozeß umfaßt einen ersten und einen zweiten Teilprozeß, beispielsweise den Rohbau als ersten und den Teilprozeß "Oberfläche" mit den Lackierstraßen als zweiten oder die Oberfläche als ersten und den Inneneinbau als zweiten Prozeß.

Ein Verfahren nach dem Oberbegriff des Anspruchs 1 und eine Vorrichtung nach dem Oberbegriff des Anspruchs 25 sind aus DE 19927563 A1 bekannt. Offenbart wird eine Trennung von Abfolge der Fertigungsobjekte und Abfolge der Aufträge. In einem ersten Teilprozeß, dort Produktionsschritt genannt, wird gemäß der Auftrags-Abfolge eine Abfolge von Fertigungsobjekten gefertigt. Jedes Fertigungsobjekt, dort Produkt genannt, entsteht aufgrund eines Auftrags der Auftrags-Abfolge. Nachdem ein Fertigungsobjekt den ersten Teilprozeß durchlaufen hat, wird ihm derselbe oder aber ein anderer Auftrag temporär zugeordnet. Hierdurch werden ein Fertigungsobjekt und ein Auftrag für den zweiten Teilprozeß ausgewählt. Ein Arbeitsauftrag an den zweiten Teilprozeß zur Bearbeitung des ausgewählten Fertigungsobjekts gemäß des ausgewählten Auftrags wird erzeugt und beim Durchlauf des Fertigungsobjekts durch den zweiten Teilprozeß abgearbeitet.

Bei Anwendung des in DE 19927563 A1 offenbarten Verfahrens kann es häufig passieren, daß dem ersten Fertigungsobjekt der Fertigungsobjekt-Abfolge nicht der erste Auftrag der Auftrags-Abfolge zugeordnet wird, sondern ein späterer Auftrag. Ein Grund hierfür ist, daß das aufgrund des ersten Auftrags gefertigte Fertigungsobjekt im ersten Teilprozeß verzögert fertiggestellt und von einem anderen Fertigungsobjekt überholt wurde. Die Bearbeitung des ersten Auftrags im zweiten Teilprozeß wird dadurch verspätet begonnen, und die Gefahr besteht, daß das Produkt für den ersten Auftrag verspätet fertiggestellt wird.

In US 5,229,948 wird ein Verfahren offenbart, um automatisch die Systemparameter eines seriellen Fertigungsprozesses ("manufacturing system") zu optimieren, so daß vorgegebene Anforderungen z. B. hinsichtlich der Anzahl hergestellter Produkte erfüllt werden. Zu den Systemparametern gehören Taktzeit ("cycle time"), Kapazitäten von Zwischenspeichern ("buffers") für Fertigungsobjekte, Prozeß-Ressourcen und maximale Reparaturzeiten. Die Fertigungsobjekte durchlaufen Zwischenspeicher beispielsweise zwischen Teilprozessen, die jeweils parallel Fertigungsstraßen besitzen. Ein stochastisches Modell wird vorgestellt. Dessen Optimierung liefert eine Belegung der gesuchten Systemparameter. Das in US 5,229,948 offenbarte Verfahren läßt sich auf die Fertigung gleichartiger, also nicht auftragspezifischer, Produkte anwenden.

In DE 19902056 C1 wird ein Verfahren offenbart, um eine Reihenfolge unter Aufträgen für Kraftfahrzeuge festzulegen, wobei einzelne Aufträge zu einer Auftrags-Abfolge zusammengestellt werden. Hierfür werden technische Merkmale des durch einen Auftrag jeweils spezifizierten Produkts gewichtet, die vorliegenden Aufträge werden aufgrund der Merkmale und ihrer Gewichtungen bewertet, und eine Gesamtbewertung jeder möglichen Auftrags-Abfolge wird erzeugt. Das Verfahren legt nicht fest, in welcher Reihenfolge Fertigungsobjekte für die Produkte, die durch die Auftrags-Abfolge spezifiziert werden, gefertigt werden.

Aus DE 19815619 A1 ist die Verwendung eines Puffers für Fertigungsobjekte bekannt. Dieser Puffer dient dazu, Fertigungsobjekte für den nachfolgenden Fertigungsprozeß neu aufzureihen.

Der Erfindung liegt die Aufgabe zugrunde, ein Verfahren nach dem Oberbegriff des Anspruchs 1 und eine Vorrichtung nach dem Oberbegriff des Anspruchs 25 zu schaffen, durch das weniger

Aufträge verspätet dem zweiten Teilprozeß zugeführt werden.

Die Aufgabe wird durch ein Verfahren nach Anspruch 1 und eine Vorrichtung nach Anspruch 25 gelöst. Vorteilhafte Ausgestaltungen werden durch die Unteransprüche festgelegt.

Eine Abfolge von in elektronischer Form vorliegenden Aufträgen für Produkte, die im Fertigungsprozeß gefertigt werden, wird erzeugt. Im ersten Teilprozeß wird gemäß der Auftrags-Abfolge eine Abfolge von Fertigungsobjekten gefertigt. Ein Auswahlvorgang wird durchgeführt, bei dem ein Fertigungsobjekt der Fertigungsobjekt-Abfolge und ein Auftrag der Auftrags-Abfolge, die zueinander passen, ausgewählt werden. Auswahlvorgang und Produktfertigung werden wiederholt, bis für jeden Auftrag der Auftrags-Abfolge ein Produkt gefertigt ist.

Erfindungsgemäß wird ein Sortierpuffer mit Plätzen für Fertigungsobjekte vorgesehen. Der Sortierpuffer wird zwischen dem ersten und dem zweiten Teilprozeß angeordnet und erlaubt vorzugsweise einen wahlfreien Zugriff auf jedes in ihn eingestellte Fertigungsobjekt. Falls zum ersten Auftrag der Auftrags-Abfolge nicht das erste Fertigungsobjekt der Fertigungsobjekt-Abfolge paßt, wird ein zum Auftrag passendes Fertigungsobjekt der Fertigungsobjekt-Abfolge auf den ersten Platz der Fertigungsobjekt-Abfolge vorgezogen. Dies wird erreicht, indem alle Fertigungsobjekte der Fertigungsobjekt-Abfolge vor dem passenden Fertigungsobjekt zeitweise in den Sortierpuffer eingestellt werden, bis das passende Fertigungsobjekt das erste Fertigungsobjekt ist. Das auf den ersten Platz vorgezogene Fertigungsobjekt und der erste Auftrag der Auftrags-Abfolge werden ausgewählt, und das ausgewählte Fertigungsobjekt wird gemäß dem ausgewählten Auftrag im zweiten Teilprozeß bearbeitet.

Durch die Erfindung wird erreicht, daß der erste Auftrag häufiger als im Verfahren gemäß DE 19927563 A1 ohne Verzögerung dem zweiten Teilprozeß zugeführt wird. Die Verwendung des Sortierpuffers ist insbesondere dann von Vorteil, wenn die Gestaltung des Fertigungsprozesses und/oder die zur Verfügung stehenden Räumlichkeiten in einer Fertigungsstätte es nicht erlauben, daß ein Fertigungsobjekt der Fertigungsobjekt-Abfolge ein anderes Fertigungsobjekt überholt.

Jedes Fertigungsobjekt wird im ersten Teilprozeß aufgrund eines Auftrags der Auftrags-Abfolge gefertigt. Dieses Fertigungsobjekt besitzt eine bestimmte Position in der Fertigungsobjekt-Abfolge. Diese Position kann von der Position desjenigen Auftrags, aufgrund dessen das Fertigungsobjekt gefertigt wurde, abweichen. Das Fertigungsobjekt kann diesem Auftrag sowohl vorausgehen als auch nachfolgen. In diesem Fall kann es erforderlich sein, das Fertigungsobjekt zwischenzulagern. Die Erfindung macht es aber nicht erforderlich, den Sortierpuffer so groß zu dimensionieren, daß alle Fertigungsobjekte zwischengelagert werden, die vor dem Fertigungsobjekt kommen, das aufgrund des ersten Auftrags der Auftrags-Abfolge gefertigt wurde. Vielmehr wird das erste Fertigungsobjekt, das zum ersten Auftrag paßt, ausgewählt, und dieses passende kann ein anderes Fertigungsobjekt sein als das, was aufgrund des ersten Auftrags gefertigt wurde.

Vorzugsweise wird der Fertigungsprozeß so organisiert, daß sich die Fertigungsobjekte nach Verlassen des ersten Teilprozesses nur in relativ wenigen Merkmalen mit jeweils wenigen Ausprägungen voneinander unterscheiden. In diesem Fall läßt sich das erfindungsgemäße Verfahren besonders vorteilhaft anwenden. Denn diese relativ geringe Varianz läßt sich dank des Verfahrens ausnutzen, um die Aufgabe des Verfahrens zu lösen und dafür einen Sortierpuffer mit nur relativ wenigen verfügbaren Plätzen zu verwenden. Denn weil die Fertigungsobjekte eine relativ geringe Varianz aufweisen, paßt relativ oft eines der ersten Fertigungsobjekte zum ersten Auftrag, und im Durchschnitt werden nur relativ wenige Fertigungsobjekte in den Sortierpuffer eingestellt.

Der Fertigungsprozeß läßt sich durch die Ausgestaltung der Prüfung, ob ein Fertigungsobjekt und ein Auftrag zueinander passen, so steuern, daß vorgegebene Anforderungen erfüllt und vorgegebenen Randbedingungen eingehalten werden. Falls beispielsweise der Sortierpuffer relativ wenige verfügbare Plätze bietet, so wird vorzugsweise die Prüfung so durchgeführt, daß relativ viele Fertigungsobjekte zu einem Auftrag passen. Dies wird z. B. dadurch erreicht, daß bei der Prüfung nur wenige Produkt-Merkmale berücksichtigt werden. Dann werden im Durchschnitt nur relativ wenige Fertigungsobjekte als nicht passend in den Sortierpuffer eingestellt. Der zweite Teilprozeß muß dann so flexibel ausgestaltet werden, daß er ein ausgewähltes Fertigungsobjekt auch dann gemäß eines ausgewählten Auftrags bearbeiten kann, wenn das Fertigungsobjekt nur hinsichtlich relativ weniger Merkmale zum Auftrag paßt.

Falls hingegen der zweite Teilprozeß auf großen Durchsatz hin optimiert ist und wenig flexibel ist, so wird bevorzugt die Prüfung so durchgeführt, daß viele Merkmale des Fertigungsobjekts zu den entsprechenden Produkt-Merkmalen passen müssen, damit Fertigungsobjekt und Auftrag als passend gewertet werden. Zweckmäßigerweise wird ein Sortierpuffer mit vielen Plätzen vorgesehen.

Berücksichtigt wird die Einschränkung, daß sich nicht beliebig viele Fertigungsobjekte in den Sortierpuffer einstellen lassen. Vielmehr besitzt der Sortierpuffer eine festgelegte Höchstanzahl verfügbarer Plätze für Fertigungsobjekte. Beispielsweise hat der Sortierpuffer die Form eines Hochregallagers oder von Stellplätzen auf einer Freifläche. Daher wird vor der Auswahl eines passenden Fertigungsobjekts geprüft, ob alle Fertigungsobjekte vor dem passenden Fertigungsobjekt Platz im Sortierpuffer haben. Hierbei wird geprüft, ob für alle Fertigungsobjekte, die in der Fertigungsobjekt-Abfolge vor einem zum ersten Auftrag passenden Fertigungsobjekt angeordnet sind, freie Plätze im Sortierpuffer verfügbar sind. Nur dann, wenn genügend freie Plätze verfügbar sind, wird das passende Fertigungsobjekt auf den ersten Platz vorgezogen und gemeinsam mit dem Auftrag ausgewählt.

Eine bevorzugte Ausführungsform sieht vor, daß Fertigungsobjekt wieder aus dem Sortierpuffer zu entnehmen, wenn dies möglich ist. Dadurch wird ein Platz wieder zur Verfügung gestellt. Vorzugsweise werden daher zunächst die Fertigungsobjekte im Sortierpuffer und erst dann Fertigungsobjekte der Fertigungsobjekt-Abfolge mit dem ersten Auftrag der Auftrags-Abfolge verglichen. Gemäß Anspruch 6 werden bei einem Auswahlvorgang dann, wenn der erste Auftrag der Auftrags-Abfolge zu einem Fertigungsobjekt im Sortierpuffer paßt, der erste Auftrag und das Fertigungsobjekt ausgewählt. Anschließend wird das Fertigungsobjekt dem Sortierpuffer entnommen.

Sind nicht genügend freie Plätze verfügbar oder wurde kein zum ersten Auftrag passendes Fertigungsobjekt gefunden, so wird gemäß der Ausgestaltung nach Anspruch 7 der Auftrag nicht ausgewählt, sondern zurückgestellt. Für das Zurückstellen von Aufträgen wird ein zunächst leerer elektronischer Zwischenspeicher für Aufträge erzeugt. Der erste Auftrag wird dann, wenn das passende Fertigungsobjekt sich nicht auf den ersten Platz vorziehen läßt, in diesen Zwischenspeicher eingestellt.

Aufträge, die in den Zwischenspeicher zurückgestellt wurden, sind in späteren Auswahlvorgängen auswählbar, z. B. wenn zum Vorziehen eines passenden Fertigungsobjekts weniger nicht passende Fertigungsobjekte vorgezogen werden müssen oder wenn im Sortierpuffer mehr freie Plätze verfügbar sind. Dadurch können die Aufträge noch bearbeitet werden, wenn auch mit Verzögerung, was besser ist, als wenn sie storniert werden würden.

Eine bevorzugte Ausführungsform sieht vor, daß vorrangig für einen Auftrag, der durch Einstellen in den Zwischenspeicher zurückgestellt wurde, ein passendes Fertigungsobjekt gesucht wird. Dadurch wird erreicht, daß Aufträge nur so kurz wie nötig zurückgestellt werden und nur möglichst wenige Auswahlvorgänge lang im Zwischenspeicher verbleiben. Gemäß Anspruch 8 wird zunächst geprüft, ob ein Auftrag im Zwischenspeicher zu einem Fertigungsobjekt im Sortierpuffer paßt. Ist dies der Fall, werden Auftrag und Fertigungsobjekt ausgewählt. Der Auftrag wird aus dem Zwischenspeicher und das Fertigungsobjekt aus dem Sortierpuffer entfernt. Paßt kein Fertigungsobjekt im Sortierpuffer zu einem Auftrag im Zwischenspeicher, so werden ein Auftrag im Zwischenspeicher und ein passendes Fertigungsobjekt in der Fertigungsobjekt-Abfolge ausgewählt. Ist das passende Fertigungsobjekt nicht das erste der Abfolge, so wird das passende Fertigungsobjekt mit Hilfe des Sortierpuffers auf den ersten Platz vorgezogen. Der Auftrag wird aus dem Zwischenspeicher entfernt. Die Auswahl und das Vorziehen werden nur dann durchgeführt, wenn im Sortierpuffer noch genügend freie Plätze verfügbar sind. Ansonsten wird der Auftrag im Zwischenspeicher nicht ausgewählt.

Mehrere Ausgestaltungen der Ausführungsform nach Anspruch 8 legen für den Fall, daß sich mehrere Aufträge im Zwischenspeicher befinden, fest, ob und wenn ja wie einer von diesen ausgewählt wird. Falls der Sortierpuffer eine Höchstanzahl verfügbarer Plätze besitzt, wird nach einem Auftrag gesucht, der zu einem Fertigungsobjekt der Fertigungsobjekt-Abfolge paßt, das auf den ersten Platz vorgezogen werden kann. Falls es mehrere solche Aufträge im Zwischenspeicher gibt, wird z. B. der mit der längsten Verweildauer ausgewählt - oder derjenige, dessen Auswahl am wenigsten Einstellvorgänge in den Sortierpuffer erfordert. Gemäß der Ausgestaltung nach Anspruch 9 ist eine Höchstanzahl von Auswahlvorgängen vorgegeben - beispielsweise aufgrund einer Anforderung an die maximal zulässige Verzögerung der Erfüllung eines Auftrags. Ein Auftrag im Zwischenspeicher wird dann ausgewählt, wenn die Anzahl von Auswahlvorgängen, die dieser Auftrag im Zwischenspeicher verweilt, die vorgegebene Höchstanzahl erreicht oder übersteigt. In diesem Fall wird der Auftrag auch dann ausgewählt, wenn ein anderer Auftrag im Zwischenspeicher zu einem Fertigungsobjekt im Sortierpuffer paßt oder weniger Einstellvorgänge in den Sortierpuffer erfordert.

Die bislang beschriebenen Ausführungsformen des Verfahrens sehen vor, daß ein Auftrag dann in den Zwischenspeicher eingestellt wird, wenn nicht genügend freie Plätze im Sortierpuffer verfügbar sind, um ein passendes Fertigungsobjekt der Fertigungsobjekt-Abfolge auf den ersten Platz vorzuziehen. Ansonsten werden der erste Auftrag und ein passendes Fertigungsobjekt ausgewählt. Die Ausgestaltung nach Anspruch 10 berücksichtigt die Tatsache, daß das Einstellen eines Fertigungsobjekts in den Sortierpuffer teurer ist und mehr Zeit erfordert als das Einstellen eines Auftrags in den elektronischen Zwischenspeicher. Gemäß Anspruch 10 wird daher der erste Auftrag der Auftrags-Abfolge bereits dann in den Zwischenspeicher eingestellt, wenn der erste Auftrag weder zu einem Fertigungsobjekt im Sortierpuffer noch zum ersten Fertigungsobjekt der Fertigungsobjekt-Abfolge paßt. Daraufhin wird der zweite Auftrag mit den Fertigungsobjekten im Sortierpuffer und dem ersten Fertigungsobjekt der Fertigungsobjekt-Abfolge verglichen und so fort.

Sichergestellt wird, daß ein Auftrag nicht beliebig lange im Zwischenspeicher verbleibt. Daher werden bei einem Auswahlvorgang zunächst die Aufträge im Zwischenspeicher mit den Fertigungsobjekten im Sortierpuffer und in der Fertigungsobjekt-Abfolge verglichen. Für jeden Auftrag im Zwischenspeicher wird weiterhin gezählt, wie viele Auswahlvorgänge der Auftrag bereits im Zwischenspeicher verblieben ist. Vorzugsweise wird als erstes für den Auftrag mit der größten Verweilanzahl ein passendes Fertigungsobjekt gesucht. Wenn die Verweilanzahl eines Auftrags im Zwischenspeicher eine vorgegebene maximale Anzahl erreicht hat, werden dieser Auftrag und ein passendes Fertigungsobjekt auf jeden Fall ausgewählt- vorausgesetzt ein passendes Fertigungsobjekt befindet sich im Sortierpuffer oder läßt sich auf den ersten Platz der Fertigungsobjekt-Abfolge vorziehen.

Eine Ausgestaltung des erfindungsgemäßen Verfahrens sieht vor, die Dimensionierung des Sortierpuffers vorab durch Simulationen zu ermitteln. Verschiedene mögliche Werte für die Höchstanzahl verfügbarer Plätze des Sortierpuffers für Fertigungsobjekte sind gemäß Anspruch 17 vorgegeben. Falls durch Simulationen zusätzlich ermittelt werden soll, welche Auswirkungen ein Sortierpuffer überhaupt hat, wird als einer der möglichen Werte der Wert 0 für die Simulationen vorgegeben. In den Simulationen wird für jeden möglichen Wert ermittelt, welche Auswirkungen ein Sortierpuffer mit diesem Wert als Höchstanzahl verfügbarer Plätze auf eine Referenz-Abfolge von Aufträgen und Fertigungsobjekte gehabt hätte.

In einer ersten Phase wird eine Referenz-Abfolge von in elektronischer Form vorliegenden Referenz-Aufträgen für Referenz-Produkte, die im Fertigungsprozeß gefertigt werden, erzeugt. Weiterhin wird in der ersten Phase gemäß der Referenz-Auftrags-Abfolge im ersten Teilprozeß eine Abfolge von Referenz-Fertigungsobjekten gefertigt. Protokolliert wird, in welcher Reihenfolge die Fertigungsobjekte den ersten Teilprozeß verlassen. Dadurch wird ein Abbild der Referenz-Fertigungsobjekte-Abfolge erzeugt. Weiterhin werden diejenigen Merkmale von Referenz-Aufträgen und von Referenz-Fertigungsobjekten protokolliert, die zur Auswahl von Referenz-Aufträgen und Referenz-Fertigungsobjekten für den zweiten Teilprozeß verwendet werden. Diese Protokollierung der Merkmale wird durchgeführt, weil die Auswahlvorgänge für den zweiten Teilprozeß in der Simulation und mit Hilfe eines simulierten Sortierpuffers durchgeführt werden und für diese Simulationen die protokollierten Merkmale verwendet werden.

In der ersten Phase braucht noch kein Sortierpuffer vorhanden zu sein. Die tatsächliche Abfolge der Auswahlvorgänge von Referenz-Aufträgen und Referenz-Fertigungsobjekten in der ersten Phase braucht ebenfalls nicht protokolliert zu werden, weil diese tatsächliche Abfolge nicht für die Simulation verwendet wird.

In der zweiten Phase werden die Simulationen durchgeführt, um die Anzahl der verfügbaren Plätze im Sortierpuffer zu bestimmen. Ein elektronisches Abbild der protokollierten Referenz-Fertigungsobjekt-Abfolge wird erzeugt. Weiterhin wird ein Modell des Sortierpuffers erzeugt. Für jeden der möglichen Werte wird eine Simulation durchgeführt. Hierbei wird die Höchstanzahl verfügbarer Plätze des Sortierpuffer-Modells auf den Wert eingestellt. Eine Simulation aller Auswahlvorgänge für den zweiten Teilprozeß unter Verwendung der Referenz-Auftrags-Abfolge, des Abbildes, des Sortierpuffer-Modells und des Zwischenspeichers wird durchgeführt. In der Simulation wird dann, wenn der erste Referenz-Auftrag der Referenz-Auftrags-Abfolge zu keinem Referenz-Fertigungsobjekt im Sortierpuffer-Modell paßt, geprüft, ob für alle Abbilder von Referenz-Fertigungsobjekten, die im Abbild der Referenz-Fertigungsobjekt-Abfolge vor einem zum ersten Referenz-Auftrag passenden Referenz-Fertigungsobjekt-Abbild angeordnet sind, freie Plätze im Sortierpuffer-Modell verfügbar sind. Wenn genügend freie Plätze vorhanden sind, werden der erste Referenz-Auftrag und das zum Referenz-Auftrag passende Referenz-Fertigungsobjekt-Abbild ausgewählt. Alle Referenz-Fertigungsobjekt-Abbilder, die im Abbild der Referenz-Fertigungsobjekt-Abfolge vor dem ausgewählten Referenz-Fertigungsobjekt-Abbild angeordnet sind, werden in das Modell des Sortierpuffers eingestellt. In der Simulation ist ein Referenz-Fertigungsobjekt-Abbild dann und nur dann in das Modell einstellbar, wenn das Modell noch einen freien Platz umfaßt.

In Abhängigkeit von den Ergebnissen der Simulationen wird einer der möglichen Werte ausgewählt. Als realer Sortierpuffer wird für die Auswahlvorgänge der aktuellen Auftrags-Abfolge ein Sortierpuffer mit dem ausgewählten Wert als Höchstanzahl verfügbarer Plätze verwendet.

Simulationen sind wesentlich preisgünstiger und lassen sich schneller durchführen als Versuche mit realen Fertigungsobjekten. Dadurch, daß vorab Simulationen durchgeführt werden, wird ein geeignet dimensionierter Sortierpuffer verwendet. Vermieden wird, daß ein zu kleiner Sortierpuffer vorgesehen wird, was dazu führen kann, daß viele Aufträge zurückgestellt werden müssen. Ein Sortierpuffer, der größer als erforderlich ist, verbraucht hingegen oft zu viel Kapital und Platz. Das Verfahren nach Anspruch 17 zeigt eine objektive und nachvollziehbare Vorgehensweise auf, den Sortierpuffer zu dimensionieren.

Die Simulationen werden auf der Basis der in der ersten Phase protokollierten Abfolgen durchgeführt. Diese Protokolle sind oft ohnehin vorhanden. Für die Simulationen wird kein Modell des Fertigungsprozesses oder des ersten Teilprozesses benötigt. Die Aufstellung eines solchen Modells ist zeitaufwendig und fehlerträchtig, weswegen es von Vorteil ist, daß kein solches Modell benötigt wird.

Vorzugsweise wird durch die Simulationen ermittelt, welche Auswirkungen auf die Positionstreue ein Sortierpuffer mit einer bestimmten Höchstanzahl verfügbarer Plätze hat. Ein Auftrag erreicht positionstreu den zweiten Teilprozeß, wenn er dann ausgewählt wird, wenn er auf den ersten Platz der Auswahl-Abfolge vorgerückt ist. Er erreicht den zweiten Teilprozeß zu spät, wenn er zurückgestellt und in den Zwischenspeicher eingestellt werden muß, weil das erste Fertigungsobjekt der Fertigungsobjekt-Abfolge nicht paßt und es nicht möglich ist, ein passendes Fertigungsobjekt auf den ersten Platz vorzuziehen. Ein Auftrag erreicht den zweiten Teilprozeß zu früh, wenn er ausgewählt wird, obwohl er noch nicht der erste Auftrag der Auftrags-Abfolge ist. Dies kann nur passieren, wenn ein anderer Auftrag zurückgestellt und in den Zwischenspeicher eingestellt wurde. Daher wird bevorzugt der Positionstreue-Grad, das ist der Anteil positionstreuer Aufträge an der gesamten Menge von Aufträgen der Auftrags-Abfolge, als quantifizierbares und meßbares Maß für die Auswirkungen eines Sortierpuffers mit einer bestimmten Höchstanzahl verfügbarer Plätze verwendet. Offensichtlich wird der Positionstreue-Grad um so größer, je größer die Höchstanzahl verfügbare Plätze des Sortierpuffers ist. Denn je mehr freie Plätze der Sortierpuffer hat, desto weniger Aufträge müssen zurückgestellt werden, weil mangels freier Plätze kein passendes Fertigungsobjekt auf den ersten Platz vorgezogen werden kann. In den Simulationen wird daher bevorzugt Positionstreue-Grad für die Referenz-Abfolge bestimmt.

Eine Ausgestaltung sieht vor, daß eine Positionstreue-Funktion ermittelt wird. Diese Funktion gibt für jede mögliche Anzahl verfügbarer Plätze den dann erreichten Positionstreue-Grad an. Die Funktion ist monoton steigend, denn je mehr Plätze verfügbar sind, desto größer ist die erreichte Positionstreue. Ermittelt werden kann, wann eine Erhöhung der Höchstanzahl verfügbarer Plätze noch eine bedeutende Auswirkung auf den Positionstreue-Grad hat und wann nicht.

Im folgenden wird ein Ausführungsbeispiel des erfindungsgemäßen Verfahrens anhand der beiliegenden Zeichnung näher beschrieben. Dabei zeigen:

Fig. 1. die Reihenfolge von acht Gewerken eines Fertigungsprozesses zur Herstellung von Kraftfahrzeugen;

Fig. 2. die Fertigungsobjekte und Aufträge im Ausführungsbeispiel nach dem ersten Auswahlvorgang;

Fig. 3. die Fertigungsobjekte und Aufträge im Ausführungsbeispiel nach dem zweiten Auswahlvorgang;

Fig. 4. die Fertigungsobjekte und Aufträge im Ausführungsbeispiel nach dem fünften Auswahlvorgang;

Fig. 5. die Fertigungsobjekte und Aufträge im Ausführungsbeispiel nach dem achten Auswahlvorgang;

Fig. 6. die Fertigungsobjekte und Aufträge im Ausführungsbeispiel nach dem zehnten Auswahlvorgang;

Fig. 7. die Fertigungsobjekte und Aufträge im Ausführungsbeispiel nach dem dreizehnten Auswahlvorgang;;

Fig. 8. ein Histogramm für die Verteilung der Relativ-Positionen der Aufträge;

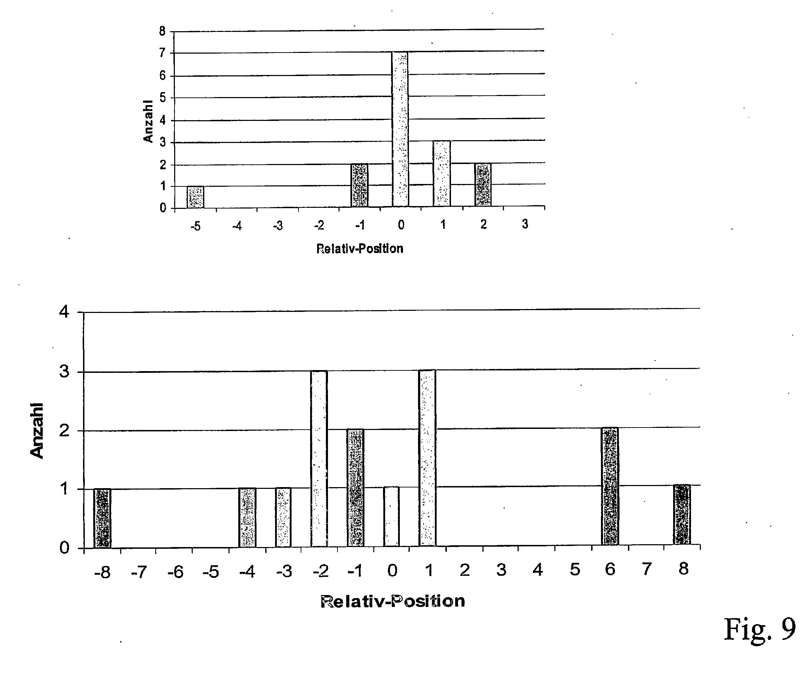

Fig. 9. ein Histogramm für die Verteilung der Relativ-Positionen der Aufträge, falls kein Sortierpuffer verwendet wird, und das Histogramm aus Fig. 8;

Fig. 10. die Reihenfolge-Güte als Funktion der Anzahl verfügbarer Plätze des Sortierpuffers;

Fig. 11. der maximale Nachgriff als Funktion der Anzahl verfügbarer Plätze des Sortierpuffers.

Das im folgenden beschriebene Ausführungsbeispiel der Erfindung bezieht sich auf einen Fertigungsprozeß zur Herstellung von Kraftfahrzeugen. Dieser Fertigungsprozeß umfaßt folgende zehn Gewerke, die ein Fertigungsobjekt nacheinander durchläuft, damit aus ihm ein Kraftfahrzeug hergestellt wird:

- Fahrzeug-Einplanung,

- Vorlauf-Logistik 100.1: der erforderliche Vorlauf für die Produktion, z. B. um Lieferanten zu informieren und/oder zu beauftragen,

- Rohbau 100.2,

- Oberfläche 100.3, insbes. Lackierung,

- Produktions-Logistik 100.4, durch die insbesondere Zeiten für

    - Transporte innerhalb der Fertigungsstätte,

    - unterschiedliche Arbeitszeiten der "Gewerke"

    - und Zusammenstellen der Produkte in der Reihenfolge, in der nachfolgende Teilprozesse diese benötigen,

    - berücksichtigt werden,

- Inneneinbau 100.5 als Teilprozeß, der alle Montagen in das Innere des Autos zusammenfaßt, z. B. Cockpit, Sitze, Verkleidungen,

- Fahrwerk 100.6 als Teilprozeß, der alle Montagen von unten zusammenfaßt, z. B. Motor, Triebstrang, Achsen, Räder, Kabel,

- Einfahren 100.7 einschließlich Einstellungen z. B. an Beleuchtung, Bremsen, Fahrwerk

- Wagen-Fertigstellung 100.8 einschließlich erforderlicher Nacharbeiten, und

- Schlußabnahme.

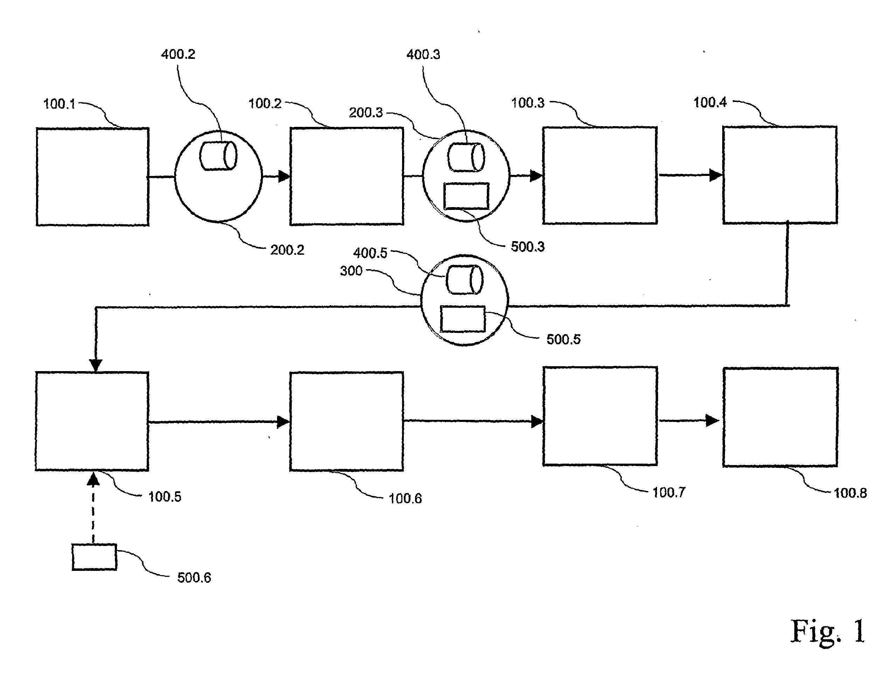

Fahrzeug-Einplanung und Schlußabnahme erfordern keine Durchlaufzeiten, so daß sie im folgenden nicht berücksichtigt werden. In welcher Reihenfolge die Fertigungsobjekte die übrigen acht Gewerke des Fertigungsprozesses durchlaufen, zeigt Fig. 1.
Jedes Gewerk umfaßt einen oder mehrere Teilprozesse. Die Teilprozesse werden so voneinander abgegrenzt, daß keine Teilprozesse parallel oder alternativ ausgeführt werden. Vielmehr werden die Teilprozesse so definiert, daß Verzweigungen nur innerhalb eines Teilprozesses auftreten. Beispielsweise umfaßt der Teilprozeß 100.3 ("Oberfläche") die beiden Arbeitsschritte 110.1 ("Grundlackierung") und 110.2 ("Decklackierung"). Im Arbeitsschritt 110.1 werden beispielsweise eine Kathodische Tauchlackierung der vom Rohbau fertiggestellten Fertigungsobjekte durchgeführt und anschließend ein Grundlack ("Füller") aufgetragen. Anschließend wird im Arbeitsschritt 110.2 der Decklack aufgetragen, der die Farbe des Kraftfahrzeugs bestimmt, und anschließend Klarlack ergänzt. In Abhängigkeit von der vorgegebenen Farbe werden der Decklack und davon abhängig der Grundlack ausgewählt.

Erfindungsgemäß durchläuft eine Abfolge 70 von Fertigungsobjekten 20.1, 20.2, ... diesen Fertigungsprozeß von Anfang bis Ende. Am Anfang existiert das Fertigungsobjekt nur "auf dem Papier", am Ende des Fertigungsprozesses ist ein fertiges Kraftfahrzeug entstanden. Parallel hierzu durchläuft eine Abfolge 50 von Aufträgen 10.1, 10.2, ... denselben Fertigungsprozeß. In diesem Beispiel bezieht sich jeder Auftrag auf ein Kraftfahrzeug. Dieses Kraftfahrzeug wird auftragsspezifisch gefertigt, also so, daß es die im Auftrag spezifizierten Anforderungen des Kunden erfüllt. Typischerweise beginnt das Fertigungsobjekt den Durchlauf durch den Fertigungsprozeß erst dann, wenn der Auftrag vorliegt. Vorzugsweise wird jedes Kraftfahrzeug aufgrund eines Auftrags gefertigt. Jeder Auftrag bezieht sich auf ein baubares Kraftfahrzeug, und die Ausführung jedes Auftrags wird nach Entgegennahme des Auftrags zumindest begonnen. Damit durchlaufen genauso viele Aufträge wie Fertigungsobjekte den Fertigungsprozeß.

Vorzugsweise werden zusätzliche fiktive Aufträge erzeugt, die sich auf ein unfertiges Kraftfahrzeug beziehen. Aufgrund eines solchen fiktiven Auftrags wird beispielsweise ein Fertigungsobjekt erzeugt, das für eine Prüfung oder Erprobung während der Fertigung vorsätzlich zerstört wird.

Bevorzugt werden die Kraftfahrzeuge im Fertigungsprozeß in Taktfertigung hergestellt. Eine Soll-Taktzeit T ist für den gesamten Fertigungsprozeß vorgegeben. Zwei aufeinanderfolgende Fertigungsobjekte der Fertigungsobjekt-Abfolge 70 werden im zeitlichen Abstand T einem Teilprozeß zugeführt.

Der Auftrag liegt in elektronischer Form vor und umfaßt z. B. folgende Festlegungen für ein Kraftfahrzeug als auftragsspezifisch zu fertigendes Produkt:

- die Baureihe,

- eine Aufbauart, z. B. Limousine oder Coupe,

- Linkslenker oder Rechtslenker,

- Farbe der Lackierung

- Art der Lackierung (z. B. Metallic-Lackierung),

- eine Motor-Variante,

- Allrad- oder Einachsantrieb,

- geschlossenes Dach oder Schiebedach,

- mit oder ohne Durchlademöglichkeit im Fahrzeuginneren,

- mit oder ohne Anhängerkupplung,

- gewünschte Sonderausstattungen für den Inneneinbau, z. B. bestimmte Leder oder Stoffe oder eine elektronische Navigationshilfe,

- gewünschte Sonderausstattungen für Fahrwerk einschließlich Antriebstrang, z. B. Kraftstoffanlage, Felgen,

- elektronische Hilfssysteme, z. B. Fensterheber oder elektronischer Bremsassistent,

- und ein vereinbarter Auslieferungstermin und ein davon abgeleiteter Schlußabnahmetermin.

Die Aufträge der Auftrags-Abfolge werden durch Datensätze einer Datenbank beschrieben. Ein Datensatz für einen Auftrag wird angelegt, sobald der Auftrag eingegangen ist. Der Datensatz verbleibt solange in der Datenbank, bis ein Kraftfahrzeug gemäß des Auftrags fertiggestellt und eine Rechnung ausgestellt und bezahlt wurde. Die Fertigungsobjekt-Abfolge wird durch eine weitere Menge von Datensätzen in der Datenbank beschrieben. Der Datensatz eines Fertigungsobjekts umfaßt die bislang gefertigten Merkmals-Ausprägungen des Fertigungsobjekts. Nachdem ein Fertigungsobjekt den Teilprozeß 100.3 durchlaufen hat, sind im Datensatz u. a. folgende Informationen über das Fertigungsobjekt enthalten:

- Farbe der Grundlackierung,

- Farbe der Decklackierung,

- Art der Decklackierung.

Vom Schlußabnahmetermin jedes Auftrags werden einerseits der Produktionsbeginn für diesen Auftrag, andererseits die Liefertermine für die zugelieferten Teilsysteme abgeleitet. Hierfür wird ausgehend vom Schlußabnahmetermin in Abhängigkeit von erreichbaren Durchlaufzeiten durch Teilprozesse und verfügbaren Ressourcen rückwärts gerechnet.

Im Fertigungsprozeß ist ein sogenannter Taufpunkt 300 definiert. Dieser Taufpunkt 300 ist der Punkt, an dem die Auftrags-Abfolge 50 und die Fertigungsobjekt-Abfolge 70 verbindlich einander zugeordnet werden. Ab diesem Punkt ist also jedem Fertigungsobjekt der Abfolge 70 ein Auftrag fest zugeordnet. Der Taufpunkt 300 wird so in den Fertigungsprozeß gelegt, daß er einerseits möglichst weit hinten im Fertigungsprozeß auftritt, andererseits viele Teilprozesse, in denen variantenreiche und oft von Auftrag zu Auftrag variierende Teilsysteme in das Fertigungsobjekt eingebaut werden, erst nach dem Taufpunkt kommen. In diesem Beispiel ist der Taufpunkt unmittelbar vor den Inneneinbau gelegt. Am Taufpunkt wird bei Bedarf die Auftrags-Reihenfolge verändert, wenn das erste Fertigungsobjekt und der erste Auftrag nicht zueinander passen.

Die Lieferanten, die Teilsysteme liefern, welche in Teilprozessen nach dem Taufpunkt 300 eingebaut werden, werden auf Basis der Auftrags-Abfolge 50 beauftragt. Ein Lieferant kann ein externer Lieferant, also ein rechtlich selbständiges Unternehmen, oder ein interner Lieferant, also ein Bereich des Kraftfahrzeug-Herstellers, sein. Die erfindungsgemäße Produktionssteuerung unterscheidet nicht zwischen internen und externen Lieferanten. Manche Teilsysteme werden für die Fertigung von auftragsspezifischen benötigt, ohne in ein Fertigungsobjekt eingebaut zu werden, z. B. Gußformen für Zylinderköpfe.

Aus jedem Auftrag der Auftrags-Abfolge 50 werden mit Hilfe einer Stückliste des Kraftfahrzeuges Aufträge für Lieferanten abgeleitet. Möglich ist, daß für ein Kraftfahrzeug mehrere Exemplare des Teilsystems zu fertigen sind, z. B. vier Sitze pro Kraftfahrzeug. Dadurch entsteht für jeden Lieferanten eine Lieferauftrags-Abfolge.

Der Taufpunkt 300 wird so weit hinten wie möglich im Fertigungsprozeß angeordnet. Dadurch erhalten die Lieferanten eine möglichst lange Vorlaufzeit, nämlich die zwischen dem Eintritt des Fertigungsobjekts in den ersten Teilprozeß 100.1 des Fertigungsprozesses und dem Erreichen des Taufpunktes 300. Bevorzugt wird der Taufpunkt 300 vor dem Teilprozeß 100.5 ("Gewerk Inneneinbau") gelegt. Die für den Inneneinbau hergestellten Teilsysteme, z. B. Kabelbäume, Cockpit und Sitze, sind in ihrer Gesamtheit so auftragsspezifisch, daß sie sich in der Regel nur für ein einziges Fertigungsobjekt verwenden lassen.

Jeweils ein Auswahlpunkt, dessen Funktion im folgenden beschrieben wird, befindet sich vor folgenden Teilprozessen:

- der Auswahlpunkt 200.2 vor dem Teilprozeß 100.2 (Gewerk Rohbau),

- der Auswahlpunkt 200.3 vor dem Teilprozeß 100.3 (Gewerk Oberfläche) und

- der Taufpunkt 300 als Auswahlpunkt vor dem Teilprozeß 100.5 (Gewerk Inneneinbau).

In den Auswahlpunkten, in denen physikalische Fertigungsobjekte ausgewählt werden, ist ein Sortierpuffer mit Plätzen für Fertigungsobjekte vorhanden. Im Beispiel der Fig. 1 sind der Auswahlpunkt 200.3 mit dem Sortierpuffer 500.3 und der Taufpunkt 300 mit dem Sortierpuffer 500.5 vorgesehen. Der Teilprozeß 100.1 liefert noch keine physikalischen Fertigungsobjekte, daher ist kein Sortierpuffer erforderlich. Jeder dieser Sortierpuffer erlaubt vorzugsweise einen wahlfreien Zugriff auf jedes in ihm eingestellte Fertigungsobjekt.

Vorzugsweise ist mindestens ein zusätzlicher Sortierpuffer für Teilsysteme vorgesehen, die aufgrund der Auftrags-Abfolge hergestellt in nach dem Taufpunkt 300 eingebaut werden. Ein solches Teilsystem wird in einen Sortierpuffer für Teilsysteme eingestellt, wenn das Fertigungsobjekt, in welches das Teilsystem eingebaut werden soll, später als geplant den Einbauort erreicht. In Fig. 1 ist ein Sortierpuffer 500.6 für Teilsysteme, die im Teilprozeß 100.5 eingebaut werden, dargestellt.

In jedem dieser Auswahlpunkte wird wiederholt ein Auswahlvorgang durchgeführt, bei dem jeweils ein Auftrag der Auftrags-Abfolge und ein Fertigungsobjekt der Fertigungsobjekt-Abfolge oder im Sortierpuffer, die zueinander passen, ausgewählt werden. Bei diesem Vergleich werden vorzugsweise Merkmale eines Auftrags mit solchen Merkmalen eines Fertigungsobjekts miteinander verglichen, die im nachfolgenden Teilprozeß erzeugt oder verändert werden, und nicht mit denen, die im Teilprozeß unverändert bleiben. Das ausgewählte Fertigungsobjekt wird dem jeweils nachfolgenden Teilprozeß zugeführt und dort gemäß des ausgewählten Auftrags bearbeitet.

Der Vergleich eines Auftrags mit einem Fertigungsobjekt erfolgt dadurch, daß der Datensatz für den Auftrag mit dem Datensatz für das Fertigungsobjekt verglichen wird. Dieser Vergleich wird vorzugsweise vollautomatisch ohne Zutun eines Menschen durchgeführt.

Die Auswahlvorgänge werden in der bevorzugten Ausführungsform von einem industrietauglichen Produktionsleitrechner ausgeführt. Dieser Produktionsleitrechner ist redundant ausgelegt und besitzt daher eine hohe Verfügbarkeit. Der Produktionsleitrechner hat Lese- und Schreibzugriff auf die Datenbank mit den Datensätzen für Aufträge und für Fertigungsobjekte.

Wie oben beschrieben, werden in jedem Auswahlpunkt bei jedem Auswahlvorgang ein Fertigungsobjekt und ein Auftrag, die zueinander passen, ausgewählt. Vorzugsweise ist jedem der Teilprozesse mit vorgelagertem Auswahlpunkt je eine Auswahl-Teilmenge von solchen Merkmalen zugeordnet, die in vorigen Teilprozessen hergestellt wurden. Ein Fertigungsobjekt und ein Auftrag werden dann als zueinander passend gewertet, wenn jedes Produkt-Merkmal des Auftrags, das der Auswahl-Teilmenge angehört, vereinbar mit allen Merkmalen des Fertigungsobjekts ist.

Vorzugsweise umfaßt jede Auswahl-Teilmenge als ein Merkmal den vom Teilprozeß geforderten Fertigstellungs-Termin, also der Termin, an dem ein zum Auftrag passendes Fertigungsobjekt spätestens im Teilprozeß gemäß des Auftrags bearbeitet und den Teilprozeß verlassen haben muß.

Weiterhin ist jedem Teilprozeß eine Bearbeitungs-Teilmenge zugeordnet. Die Merkmale der Bearbeitungs-Teilmenge eines Teilprozesses 100.x werden im Teilprozeß 100.x bearbeitet. Mit Hilfe der Merkmale eines ausgewählten Auftrags und den Merkmalen der Bearbeitungs-Teilmenge wird ein Bearbeitungsauftrag an den Teilprozeß abgeleitet. Das Fertigungsobjekt wird im Teilprozeß gemäß des Bearbeitungsauftrags abgeleitet.

Beispielsweise ist dem Teilprozeß 100.2 (Gewerk Rohbau) eine Auswahl-Teilmenge mit folgenden Merkmalen zugeordnet:

- Baureihe,

- Aufbauart.

Die Bearbeitungs-Teilmenge des Teilprozesses 100.2 umfaßt z. B. folgende Merkmale:

- Baureihe,

- Aufbauart,

- Linkslenker oder Rechtslenker,

- geschlossenes Dach oder Schiebedach,

- mit oder ohne Anhängerkupplung.

Merkmale, die im Teilprozeß 100.2 noch keine Rolle spielen, sondern erst in nachfolgenden Teilprozessen, sind weder in der Auswahl-Teilmenge noch in der Bearbeitungs-Teilmenge des Teilprozesses 100.2 enthalten, z. B. die Farbe und Art der Lackierung oder die Motor-Variante.

Im Auswahlpunkt 200.2 wird ein Fertigungsobjekt einer bestimmten Baureihe und einer bestimmten Aufbauart für den Teilprozeß 100.2 ausgewählt. Als Bearbeitungsauftrag wird die Herstellung eines Fertigungsobjekts dieser Baureihe und dieser Aufbauart mit den Merkmalen "Linkslenker" und "Schiebedach" hergeleitet.

Die Auswahl-Teilmenge des Teilprozesses 100.3 (Gewerk Oberfläche) umfaßt z. B. folgende Merkmale:

- Baureihe,

- Aufbauart,

- Linkslenker oder Rechtslenker,

- geschlossenes Dach oder Schiebedach,

- mit oder ohne Anhängerkupplung.

Die Bearbeitungs-Teilmenge des Teilprozesses 100.3 umfaßt z. B. folgende Merkmale:

- Baureihe,

- Aufbauart,

- Farbe der Grundlackierung,

- Farbe der Decklackierung,

- Art der Decklackierung.

Im Auswahlpunkt 200.3 wird z. B. ein Fertigungsobjekt einer bestimmten Baureihe und einer bestimmten Aufbauart mit den Merkmalen "Linkslenker" und "Schiebedach" für den Teilprozeß 100.5 und einem Soll-Schlußabnahmetermin ausgewählt. Als Bearbeitungsauftrag für den Teilprozeß 100.5 wird die Lackierung dieses Fertigungsobjekts in einer bestimmten Farbe und Art der Lackierung hergeleitet.

Die Auswahl-Teilmenge des Teilprozesses 100.5 (Gewerk Inneneinbau) besteht z. B. aus folgenden Merkmalen:

- Baureihe,

- Aufbauart,

- Linkslenker oder Rechtslenker,

- geschlossenes Dach oder Schiebedach.

- Farbe der Grundlackierung,

- Farbe der Decklackierung,

- Art der Decklackierung.

Die Bearbeitungs-Teilmenge des Teilprozesses 100.5 (Gewerk Inneneinbau) umfaßt z. B. folgende Merkmale:

- Baureihe,

- Aufbauart,

- Linkslenker oder Rechtslenker,

- geschlossenes Dach oder Schiebedach.

- mit oder ohne Durchlademöglichkeit im Fahrzeuginneren,

- mit oder ohne Anhängerkupplung,

- gewünschte Sonderausstattungen für den Inneneinbau.

Auch für den Teilprozeß 100.6 (Gewerk Fahrwerk) ist eine Bearbeitungs-Teilmenge vorgegeben. Eine Auswahl-Teilmenge ist nicht erforderlich, weil im Taufpunkt 300 ein Auftrag einem Fertigungsobjekt fest zugeordnet wird.

Bei einem Auswahlvorgang wird zunächst unter den Fertigungsobjekten im Sortierpuffer nach einem Fertigungsobjekt gesucht, das zum ersten Auftrag der Auftrags-Abfolge paßt. Wird ein passendes gefunden, so werden das passende Fertigungsobjekt und der erste Auftrag ausgewählt. Das ausgewählte Fertigungsobjekt wird dem Sortierpuffer entnommen und dem ersten Teilprozeß zugeführt.

Falls im Sortierpuffer kein Fertigungsobjekt gefunden wird, das zum ersten Auftrag der Auftrags-Abfolge paßt, so wird der erste Auftrag nacheinander mit den Fertigungsobjekten in der Fertigungsobjekt-Abfolge verglichen, und zwar beginnend mit dem ersten Fertigungsobjekt. Geprüft wird, ob für alle Fertigungsobjekte, die in der Fertigungsobjekt-Abfolge vor einem zum ersten Auftrag passenden Fertigungsobjekt angeordnet sind, noch freie Plätze im Sortierpuffer verfügbar sind. Falls der Sortierpuffer über insgesamt N Plätze verfügt und $N\_1$ dieser Plätze bereits durch Fertigungsobjekte belegt sind und falls sich vor dem ersten passenden Fertigungsobjekt der Fertigungsobjekt-Abfolge $N\_2$ nicht passende Fertigungsobjekte befinden, so wird geprüft, ob $N >= N\_1 + N\_2$ gilt. Ist diese Bedingung erfüllt, so werden die N_2 nicht passenden Fertigungsobjekte in den Sortierpuffer eingestellt, und das erste passende Fertigungsobjekt und der erste Auftrag werden ausgewählt.

Falls hingegen N < N_1 + N_2 gilt, so ist es nicht möglich, nur mit Hilfe des Sortierpuffers ein zum ersten Auftrag passendes Fertigungsobjekt vorzuziehen und dem jeweils nachfolgenden Teilprozeß zuzuführen. Für diese Fälle ist in jedem Auswahlpunkt ein elektronischer Zwischenspeicher für Aufträge vorgesehen. Im Beispiel der Fig. 1 sind dies die Zwischenspeicher 400.2 im Auswahlpunkt 200.2, 400.3 im Auswahlpunkt 200.3 und 400.5 im Taufpunkt 300. Der erste Auftrag wird dann aus der Auftrags-Abfolge entfernt und in den jeweiligen Zwischenspeicher eingestellt, wenn es nicht möglich ist, mit Hilfe des Sortierpuffers ein zum ersten Auftrag passendes Fertigungsobjekt vorzuziehen.

Vorzugsweise wird sichergestellt, daß ein Auftrag nicht länger als eine vorgegebene maximale Verweildauer in einem solchen Zwischenspeicher verweilt. Daher werden bei einem Auswahlvorgang dann, wenn die bisherige Verweildauer mindestens eines Auftrags im Zwischenspeicher größer oder gleich einer vorgegebenen Verweildauer-Schranke ist, folgende Schritte durchgeführt:

- Der Auftrag mit der größten Verweildauer im Zwischenspeicher und ein zu ihm passendes Fertigungsobjekt aus der Fertigungsobjekt-Abfolge werden ausgewählt.

- Der ausgewählte Auftrag wird aus dem Zwischenspeicher entfernt.

- Das ausgewählte Fertigungsobjekt wird auf den ersten Platz der Fertigungsobjekt-Abfolge vorgezogen.

Vor diesem Taufpunkt 300 wird ein Auftrag nur temporär für z. B. jeweils dem nachfolgenden Teilprozeß einem Fertigungsobjekt zugeordnet, und ein Auftrag kann in einem Teilprozeß einem Fertigungsobjekt und in einem nachfolgenden Teilprozeß einem anderen Fertigungsobjekt zugeordnet werden. In den Auswahlpunkten vor dem Taufpunkt 300, im Beispiel der Fig. 1 also in den Auswahlpunkten 200.2 und 200.3, wird eine Kopie der Auftrags-Abfolge gebildet. Die Auswahlvorgänge werden für die Aufträge in dieser Kopie anstelle für die Aufträge in der Original-Auftrags-Abfolge durchgeführt. Die Original-Auftrags-Abfolge bleibt unverändert. Falls kein zum ersten Auftrag der Kopie passendes Fertigungsobjekt der Fertigungsobjekt-Abfolge auf den ersten Platz vorgezogen werden kann, wird die Kopie in den Zwischenspeicher eingestellt und bei Erreichen der oben beschriebenen Verweildauer-Schranke wieder aus dem Zwischenspeicher entfernt.

Bevorzugt umfaßt ein Sortierpuffer für Fertigungsobjekte N Teil-Sortierpuffer TP_1, ... , TP_N. Unabhängig vom Füllstand und der Auslastung der anderen Teil-Sortierpuffer läßt sich ein Fertigungsobjekt in einen ausgewählten Teil-Sortierpuffer einstellen. Vorzugsweise haben alle Teil-Sortierpuffer gleich viele Plätze für Fertigungsobjekte. Jeder Teil-Sortierpuffer ist als Gasse ausgebildet. Zwischen diesen Gassen verkehrt eine Verteileinrichtung in Form mindestens eines Querförderers, der ein Regalbediengerät mit einem darauf abgestellten Fertigungsobjekt umfaßt. Dieser Querförderer vermag ein einzustellendes Fertigungsobjekt aus der Fertigungsobjekt-Abfolge aufzunehmen und in die ausgewählte Gasse einzustellen. Weiterhin vermag er ein in eine Gasse eingestelltes Fertigungsobjekt der Gasse zu entnehmen und dem Teilprozeß zuzuführen.

Mit Hilfe einer Bewertungsfunktion wird dann, wenn ein Fertigungsobjekt in den Sortierpuffer einzustellen ist und hierfür einer der Teil-Sortierpuffer auszuwählen ist, eine aktuelle Bewertung jedes Teil-Sortierpuffers bezüglich des Fertigungsobjekts berechnet. Diese Bewertungsfunktion bildet für jeden Teil-Sortierpuffer TP_k eine gewichtete Zusammenfassung der n Einzel-Kriterien

$C_1(TP\_k), ... , C_n(TP\_k)$ mit Hilfe von n vorgegebenen Gewichtsfaktoren $\omega_1, ... , \omega_n$, wobei $\omega_1 + ... + \omega_n = 1$ gilt. Die Bewertung Bew(TP_k) wird gemäß der Rechenvorschrift $Bew(TP\_k) = \omega_1 * C_1(TP\_k) + ... + \omega_n * C_n(TP\_k)$ berechnet. Der hierbei am höchsten bewertete Teil-Sortierpuffer wird ausgewählt.

Eine alternative Ausführungsform besteht darin, zunächst die Teil-Sortierpuffer bezüglich jedes Einzel-Kriteriums in einer Reihenfolge anzuordnen, wobei die Teil-Sortierpuffer absteigend nach Bewertungen bezüglich dieses Einzel-Kriteriums sortiert werden. Insgesamt werden dadurch n Reihenfolgen erzeugt. Jeder Teil-Sortierpuffer erhält dadurch n Platzziffern in diesen n Reihenfolgen. Der in einer Reihenfolge erste Teil-Sortierpuffer erhält die Platzziffer 1, der nachfolgende die Platzziffer 2 und so fort. Anschließend werden die n Platzziffern eines Teil-Sortierpuffers addiert. Derjenige Teil-Sortierpuffer wird ausgewählt, der die kleinste Summe der Platzziffern erhält. Das Fertigungsobjekt wird in diesen ausgewählten Teil-Sortierpuffer eingestellt.

In die Bewertungsfunktion fließen folgende Einzel-Kriterien ein:

- der aktuelle Füllstand des Teil-Sortierpuffers TP_k, das ist die aktuelle Gesamt-Anzahl der Fertigungsobjekte im Teil-Sortierpuffer TP_k,

- die aktuelle Auslastung des Teil-Sortierpuffers TP_k, das ist die aktuelle Anzahl derjenigen Fertigungsobjekte im Teil-Sortierpuffer, die in einem vorigen Auswahlvorgang ausgewählt wurden, aber noch nicht aus dem Teil-Sortierpuffer entfernt wurden,

- die aktuelle Gesamt-Anzahl derjenigen Fertigungsobjekte im Teil-Sortierpuffer TP_k, die sich durch jeweils mindestens ein Merkmal vom einzustellenden Fertigungsobjekt unterscheiden,

- und der Zeitaufwand, der erforderlich ist, um das einzustellende Fertigungsobjekt in den Teil-Sortierpuffer TP_k einzustellen.

Ein Ziel bei der Auswahl eines Teil-Sortierpuffers ist das, daß sich in jeden Teil-Sortierpuffer und zu jedem Zeitpunkt möglichst viele Varianten von Fertigungsobjekten befinden. Je besser dieses Ziel erreicht ist, desto weniger wirkt sich ein Ausfall eines Teil-Sortierpuffers auf die Abarbeitung der Auftrags-Abfolge aus.

Bevorzugt wird bei der Auswahl eines Teil-Sorterpuffers zunächst ermittelt, welche Teil-Sortierpuffer aktuell leer sind, und unter diesen leeren wird einer ausgewählt, z. B. derjenige, in den sich das Fertigungsobjekt mit dem geringsten Zeitaufwand einstellen läßt. Dieses Einzel-Kriterium hängt in der Regel nur von der Geometrie des Sortierpuffers und u. U. der Fertigungsstraße ab, aber nicht von den einzelnen Fertigungsobjekten oder Aufträgen.

Falls ein Teil-Sortierpuffer aufgrund einer Störung ausgefallen ist, wird er bei der Auswahl solange nicht berücksichtigt, bis er wieder verfügbar ist. Möglich ist auch, daß manche Fertigungsobjekte nur in einige der Teil-Sortierpuffer eingestellt werden können, z. B. aufgrund ihrer Abmessungen oder weil sie eine bestimmte Umgebungstemperatur benötigen. In diesem Fall wird vor der Auswahl ermittelt, welche Teil-Sortierpuffer zum Einstellen des Fertigungsobjekts überhaupt in Frage kommen.

In einer Fortbildung wird das dritte Einzel-Kriterium dahingehend abgewandelt, daß ein Teil-Sortierpuffer um so höher bewertet wird, je unähnlicher das einzustellende Fertigungsobjekt zu den aktuell im Teil-Sortierpuffer vorhandenen Fertigungsobjekten ist. Falls die Fertigungsobjekte in einem Teil-Sortierpuffer zueinander unähnlich sind und daher ähnliche Fertigungsobjekte stets auf verschiedene Teil-Sortierpuffer verteilt werden, so ist die Wahrscheinlichkeit größer, daß ein zum ersten Auftrag passendes Fertigungsobjekt auch dann noch dem Sortierpuffer entnommen werden kann, wenn ein Teil-Sortierpuffer wegen einer Störung ausgefallen ist und daher auf andere Teil-Sortierpuffer zurückgegriffen werden muß.

Der Wert für den Teil-Sortierpuffer TP_1 bezüglich des dritten Einzel-Kriteriums wird bevorzugt gemäß der folgenden Berechnungsvorschrift ermittelt:

Sei FO das einzustellende Fertigungsobjekt, und seien FO_1, ..., F0_m die m Fertigungsobjekte, die sich vor dem Einstellen von FO in TP_1 befinden. Der Vergleich von Aufträgen und Fertigungsobjekten wird aufgrund von r Attributen $A^{(1)}, ..., A^{(r)}$ durchgeführt. Beispiele für Attribute sind Motorvarianten, Links- oder Rechtslenker und das Vorliegen oder Nicht-Vorliegen von Sonderausstattungen. Seien $\omega^{(1)}, ..., \omega^{(r)}$ vorgegebene Gewichtungsfaktoren für die r Attribute. Für die r Attribute sind r Abstandsmaße $dist^{(1)}, ..., dist^{(r)}$ definiert. Für s=1, ...,r definiert $dist^{(s)}$ ein Maß für die Unähnlichkeit zweier möglicher Attributwerten a und b des Attributs $A^{(s)}$. Häufig ist $dist^{(s)}(a, b) = 1$, falls a gleich b ist, und $dist^{(s)}(a,b) = 0$, falls a ungleich b ist. Ein anderes Maß für die Unähnlichkeit wird vorzugsweise beispielsweise für ein Attribut definiert, das sich auf die Farbe der Lackierung von Kraftfahrzeugen bezieht. Je stärker zwei verschiedene Lackfarben voneinander abweichen, desto größer ist der Wert für dist. Berücksichtigt wird der Aufwand, eine Lackierstraße von einer Farbe auf eine andere Farbe umzustellen, und die Auswirkungen von Restpartikeln der alten Farbe auf eine Lackierung in einer neuen Farbe.

Seien $a^{(1)}, ..., a^{(r)}$ die Attributwerte des einzustellenden Fertigungsobjekts FO. Seien für k=1, ...,m $b_k^{(1)}, ...,$ $b_k^{(r)}$ die Attributwerte des Fertigungsobjekts FO_k, das sich bereits im Teil-Sortierpuffer TP_1 befindet. Der Wert bezüglich des dritten Einzel-Kriteriums wird mit dist (FO, TP_1) bezeichnet und ist ein Maß für die Unähnlichkeit von FO zu den m Fertigungsobjekten FO_1, ..., FO_m im Teil-Sortierpuffer TP_1. Dieser Wert wird gemäß der Rechenvorschrift dist (FO, TP_1) = min { dist (FO, FO_1), ..., dist (FO, FO_m) } berechnet. Für k=1,...,m ist dist (FO, FO_k) ein Maß für die Unähnlichkeit zwischen FO und F0_k, das gemäß der Rechenvorschrift

```
dist(FO, FO_k) =
      ω(1)*dist(1)(a(1), b_k(1))  ... + ω(r)*dist(r)(a(r), b_k(r))
```

berechnet wird.

Die Aufträge 10.1, 10.2, 10.3, ... von Kunden für Fahrzeuge einer bestimmten Baureihe werden in einer Auftrags-Abfolge 50 angeordnet. Aufgrund dieser Auftrags-Abfolge 50 wird die Produktion von Fertigungsobjekten für Produkte dieser Baureihe begonnen. Diese Fertigungsobjekte verlassen nacheinander den Teilprozeß 100.2 (Gewerk Rohbau) in der Fertigungsobjekt-Abfolge 20.1, 20.2, 20.3, ... Eine Kopie 60 dieser Auftrags-Abfolge 50 mit den Auftrags-Kopien 10.1, 10.2, 10.3, ... wird erzeugt.

EP 1 616 227 B1

Als Verweildauer-Schranke VS für den elektronischen Zwischenspeicher 400.3 des Auswahlpunkts 200.3 ist z. B. der Wert 3*T, also drei Taktzeiten, vorgegeben. Somit beläuft sich die Schranke auf 3 Auswahlvorgänge. Diese Schranke resultiert aus folgendem Kompromiß:

Wenn ein Auftrag im Zwischenspeicher die Verweildauer-Schranke erreicht hat, wird versucht, für diesen Auftrag ein passendes Fertigungsobjekt zu finden. Falls das erste passende Fertigungsobjekt nicht das erste der Fertigungsobjekt-Abfolge ist, werden die Fertigungsobjekte vor dem ersten passenden Fertigungsobjekt in den Sortierpuffer eingestellt.

Zum einen sollen möglichst wenige Aufträge verspätet bearbeitet werden.

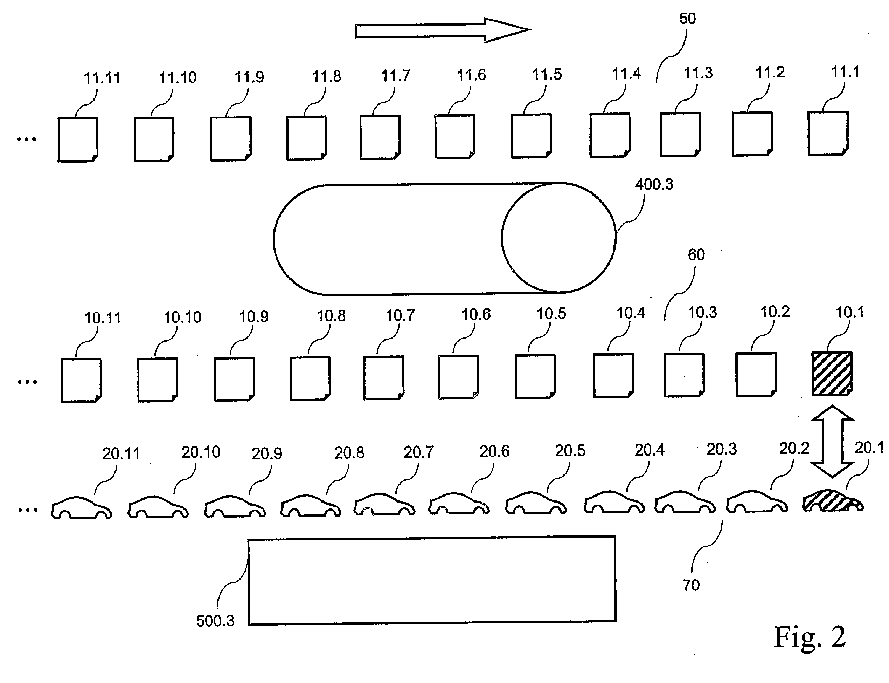

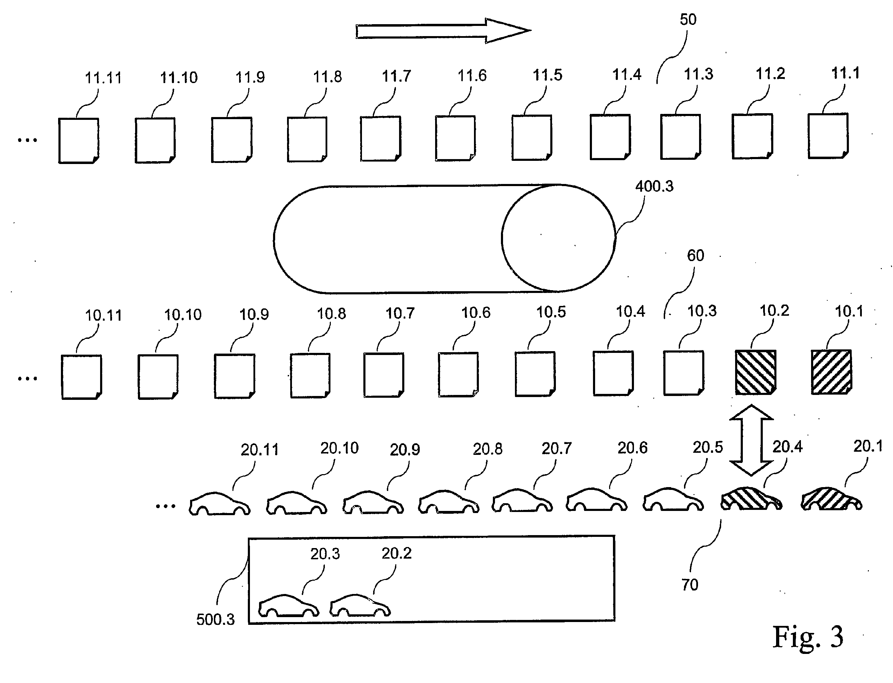

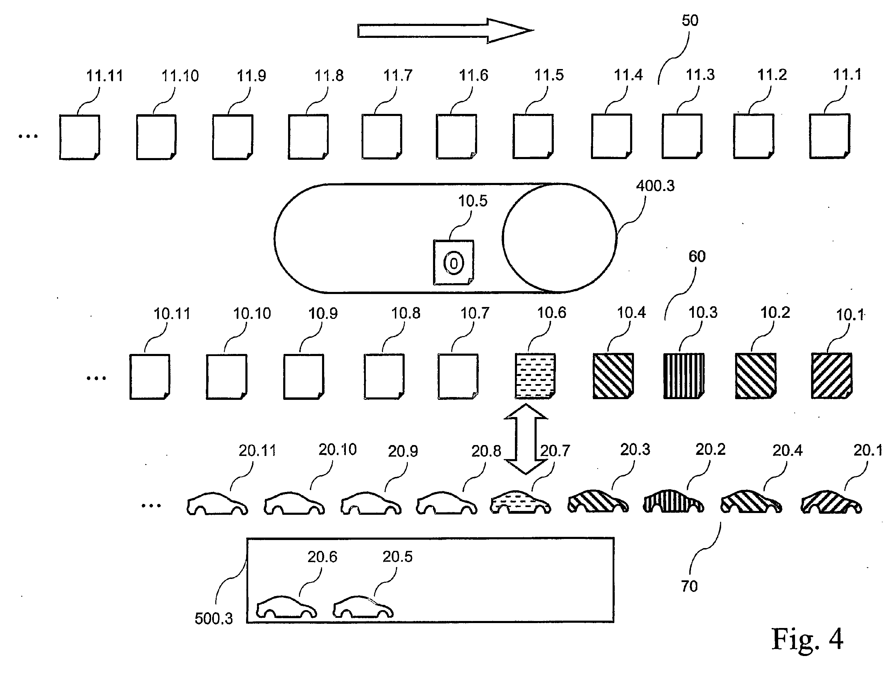

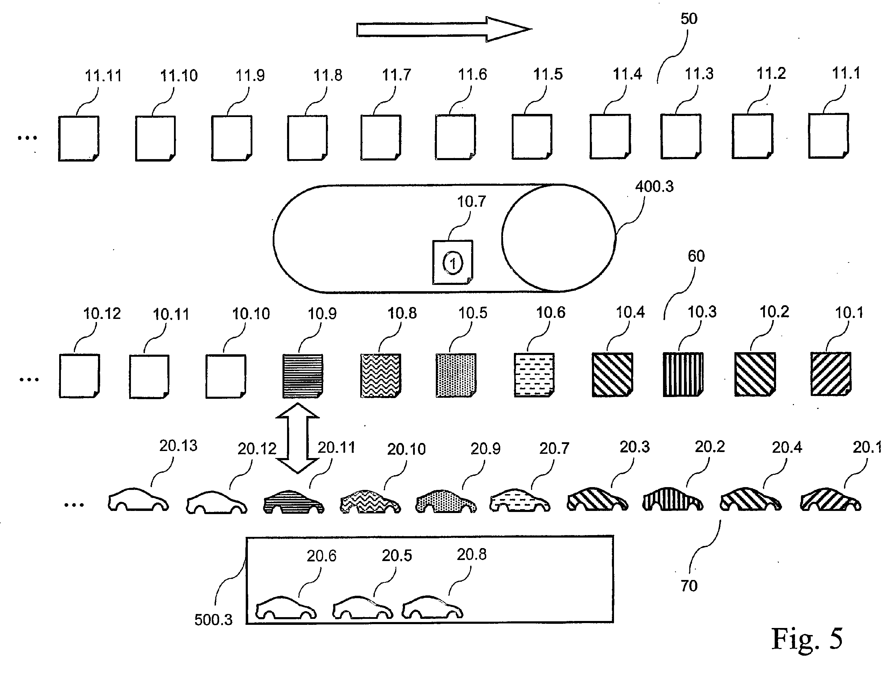

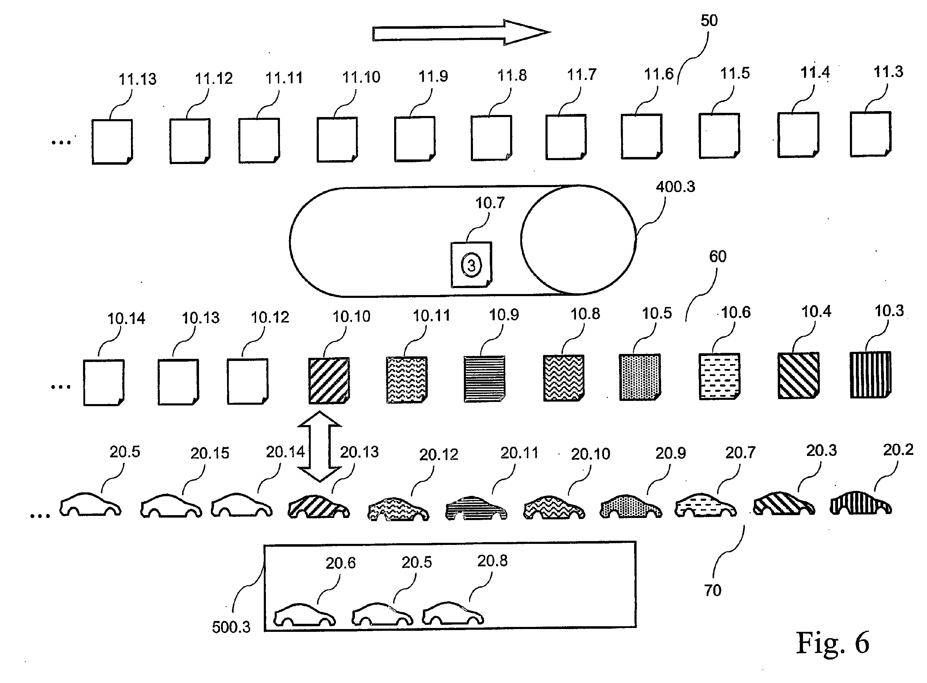

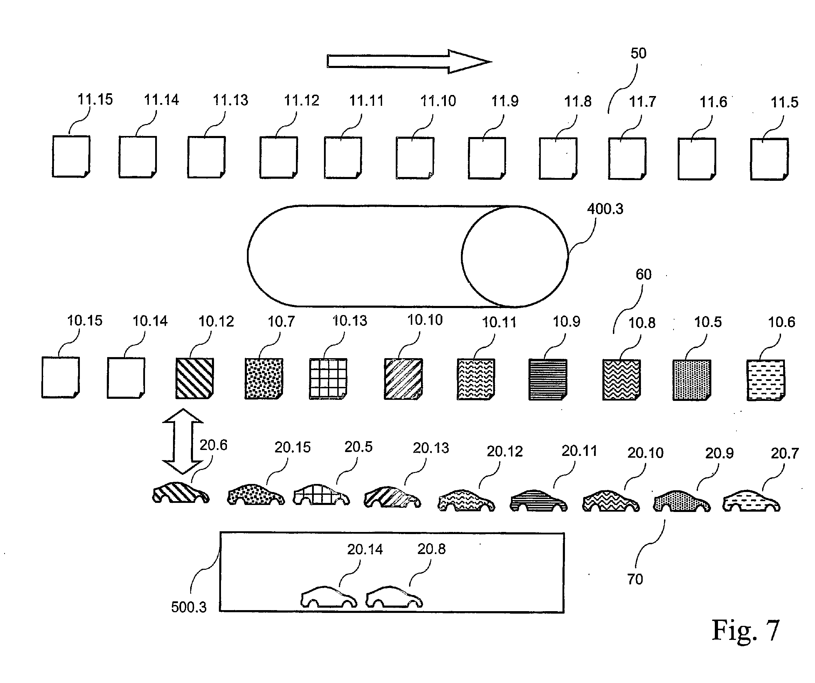

Im folgenden wird die Durchführung von Auswahlvorgängen detailliert beschrieben. Fig. 2 bis Fig. 7 zeigen Momentaufnahmen der Abfolgen 50, 60 und 70 sowie der Inhalte von Zwischenspeicher 400.3 und Sortierpuffer 500.3 nach dem ersten Auswahlvorgang (Fig. 2), nach dem zweiten Auswahlvorgang (Fig. 3), nach dem fünften Auswahlvorgang (Fig. 4), nach dem achten Auswahlvorgang (Fig. 5), nach dem zehnten Auswahlvorgang (Fig. 6) und nach dem dreizehnten Auswahlvorgang (Fig. 7). Das jeweils zuletzt ausgewählte Fertigungsobjekt und der ausgewählte Auftrag sind durch einen Doppelpfeil verbunden. Ein ausgewählter Auftrag und ein ausgewähltes Fertigungsobjekt, die zueinander passen, sind durch gleichartige Schraffur gekennzeichnet. Die Verweildauer eines Auftrags, gemessen in Takten, ist durch eine Zahl in einem Kreis gekennzeichnet.

Die Auswahlvorgänge im Auswahlpunkt 200.3 für die aktuelle Baureihe beginnen zu einem Zeitpunkt $T\_0$ und finden zu Zeitpunkten $T\_i = T\_0 + i*T$ (i=0,1,2,3,...) statt. Die für die Durchführung eines Auswahlvorgangs benötigte Zeit ist klein im Vergleich zur Taktzeit T.

Zum Zeitpunkt $T\_0$ werden der Auftrag 10.1 der Kopie 60 der Auftrags-Abfolge 50 und das Fertigungsobjekt 20.1, die zueinander passen, ausgewählt. Das Fertigungsobjekt 20.1 wird dem Teilprozeß 100.3 zugeführt und in diesem gemäß des ausgewählten Auftrags 10.1 bearbeitet. Der ausgewählte Auftrag 10.1 hat eine Relativ-Position von 0 in der Auswahl-Reihenfolge im Vergleich zur Auftrags-Abfolge 50.

Fig. 2 zeigt als Momentaufnahme die Fertigungsobjekte und Aufträge nach Durchführung dieses ersten Auswahlvorgangs. Die Aufträge und Fertigungsobjekte sind von links kommend dargestellt. Der ausgewählte Auftrag 10.1 und das ausgewählte Fertigungsobjekt 20.1 sind schraffiert dargestellt und durch einen Doppelpfeil verbunden. Der elektronische Zwischenspeicher 400.3 und der Sortierpuffer 500.3 für Fertigungsobjekte sind noch leer.

Zum Zeitpunkt $T\_1 = T\_0 + T$ wird festgestellt, daß der Auftrag 10.2 und das Fertigungsobjekt 20.2 nicht zueinander passen, weil der Auftrag 10.2 sich auf einen Linkslenker bezieht, das Fertigungsobjekt 20.2 hingegen ein Rechtslenker ist. Daraufhin werden die weiteren Fertigungsobjekte in der Fertigungsobjekt-Abfolge mit dem Auftrag 10.2 verglichen. Festgestellt wird, daß das Fertigungsobjekt 20.4 zum Auftrag 10.2 paßt. Vor dem Fertigungsobjekt 20.4 befinden sich zwei Fertigungsobjekte, die beiden in den Sortierpuffer 500.3 eingestellt werden können. Daher wird das Fertigungsobjekt 20.4 ausgewählt und auf den ersten Platz der Fertigungsobjekt-Abfolge vorgezogen. Der Auftrag 10.2 wird ebenfalls ausgewählt, und das Fertigungsobjekt 20.4 wird gemäß des Auftrags 10.2 im nachfolgenden Teilprozeß 100.3 bearbeitet. Im Sortierpuffer 500.3 befinden sich daher nach dem Zeitpunkt $T\_1$ die beiden Fertigungsobjekte 20.2 und 20.3. Fig. 3 zeigt als Momentaufnahme die Auftrags-Abfolge 50 und deren Kopie 60, die Fertigungsobjekt-Abfolge 70, den Zwischenspeicher 400.3 und den Sortierpuffer 500.3 nach Durchführung des zweiten Auswahlvorgangs.

Der nächste Auftrag 10.3 in der Kopie 60 der Auftrags-Abfolge 70 wird zum Zeitpunkt $T\_2 = T\_0 + 2*T$ zunächst mit den beiden Fertigungsobjekten im Sortierpuffer 500.3 verglichen. Der Auftrag 10.3 paßt nicht zum Fertigungsobjekt 20.2, weil der Auftrag 10.3 sich auf ein Kraftfahrzeug mit geschlossenem Dach bezieht, das Fertigungsobjekt 20.3 hingegen eines mit Schiebedach ist. Hingegen paßt der Auftrag 10.3 zum Fertigungsobjekt 20.3. Daher werden diese beiden ausgewählt. Das Fertigungsobjekt 20.3 wird dem Sortierpuffer entnommen, dem Teilprozeß 100.3 zugeführt und in diesem gemäß des Auftrags 10.3 bearbeitet.

Zum Zeitpunkt $T\_3 - T\_0 + 3*T$ wird der nächste Auftrag 10.4 in der Kopie 60 mit dem Fertigungsobjekt 20.2 im Sortierpuffer 500.3 verglichen. Die beiden passen zusammen und werden ausgewählt. Das Fertigungsobjekt 20.2 wird dem Sortierpuffer entnommen .

Zum Zeitpunkt $T\_4 = T\_0 + 4*T$ wird unter den Fertigungsobjekten der Fertigungsobjekt-Abfolge 70 nach einem Fertigungsobjekt gesucht, das zum nächsten Auftrag 10.5 der Kopie 60 paßt. Das nächste passende Fertigungsobjekt ist das Fertigungsobjekt 20.9. Um dieses Fertigungsobjekt auf den ersten Platz vorzuziehen, werden vier freie Plätze im Sortierpuffer 500.3 benötigt, weil vor 20.9 noch vier weitere Fertigungsobjekte 20.5 bis 20.8 vor dem passenden Fertigungsobjekt 20.9 kommen. Der Sortierpuffer 500.3 hat aber nur drei freie Plätze. Daher kann kein zum Auftrag 10.5 passendes Fertigungsobjekt auf den ersten Platz vorgezogen werden, und der Auftrag 10.5 wird in den Zwischenspeicher 400.3 eingestellt. Der nächäste Auftrag 10.6 der Kopie 60 wird mit den Fertigungsobjekten der Fertigungsobjekt-Abfolge 70 verglichen. Das nächste passende Fertigungsobjekt ist das Fertigungsobjekt 20.7. Die beiden vor diesem passenden Fertigungsobjekt befindlichen Fertigungsobjekte 20.5 und 20.6 werden in den Sortierpuffer 500.3 eingestellt. Das Fertigungsobjekt 20.7 und der Auftrag 10.6 werden ausgewählt. Der ausgewählte Auftrag 10.6 hat eine Relativ-Position von +1, weil er eine Position früher dem Teilprozeß 100.3 zugeführt wird, als dies der Festlegung in der Original-Auftrags-Abfolge 50 entspricht.

13

Fig. 4 zeigt als Momentaufnahme die Fertigungsobjekte und Aufträge im Ausführungsbeispiel nach dem fünften Auswahlvorgang, also nach dem Zeitpunkt T_4. Die Anzahl von Auswahlvorgängen, die ein zurückgestellter Auftrag sich bereits im Zwischenspeicher 400.3 befindet, ist durch eine Zahl in einem Kreis dargestellt.

Zum Zeitpunkt T_5 = T_0 + 5*T werden zunächst die Aufträge im Zwischenspeicher 400.3 mit den Fertigungsobjekten im Sortierpuffer 500.3 verglichen. Der einzige Auftrag 10.5 im Zwischenspeicher wurde bereits mit den Fertigungsobjekten 20.5 und 20.6 im Sortierpuffer 500.3 verglichen und als nicht passend erkannt. Das erste Fertigungsobjekt der Fertigungsobjekt-Abfolge 70, das zum Auftrag 10.5 im Sortierpuffer 500.3 paßt, ist das Fertigungsobjekt 20.9. Dieses kann nunmehr auf den ersten Platz der Fertigungsobjekt-Abfolge 70 vorgezogen werden, weil hierfür nur noch ein Fertigungsobjekt, nämlich das Fertigungsobjekt 20.8, in den Sortierpuffer 500.3 eingestellt werden muß. Daher werden der Auftrag 10.5 und das Fertigungsobjekt 20.9 ausgewählt. Das Fertigungsobjekt 20.8 wird in den Sortierpuffer 500.3 eingestellt und der Auftrag 10.6 dem Zwischenspeicher 400.3 entnommen. Der ausgewählte Auftrag 10.5 hat eine Relativ-Position von -1.

Zum Auswahl-Zeitpunkt T_6 = T_0 + 6*T wird der nächste Auftrag 10.7 zunächst mit den drei Fertigungsobjekten 20.5, 20.6 und 20.8 im Sortierpuffer 500.3 verglichen. Jedoch paßt keiner drei Fertigungsobjekte zum Auftrag 10.7. Das erste Fertigungsobjekt 20.10 der Fertigungsobjekt-Abfolge 70 paßt ebenfalls nicht zum Auftrag 10.7. Weil im Sortierpuffer 500.3 keine freien Plätze mehr verfügbar sind, wird der Auftrag 10.7 zurückgestellt, indem er in den Zwischenspeicher 400.3 eingestellt wird. Auch der nächste Auftrag 10.8 wird zunächst mit den drei Fertigungsobjekten im Sortierpuffer 500.3 verglichen, jedoch paßt er zu keinem von ihnen. Hingegen paßt der Auftrag 10.8 zum ersten Fertigungsobjekt 20.10 der Fertigungsobjekt-Abfolge 70. Daher werden 10.8 und 20.10 ausgewählt. Der ausgewählte Auftrag 10.8 hat eine Relativ-Position von +1.

Zum Auswahl-Zeitpunkt T_7 = T_0 + 7*T wird zunächst ein zum Auftrag 10.7 im Zwischenspeicher 400.3 passendes Fertigungsobjekt gesucht. Die drei Fertigungsobjekte im Sortierpuffer 500.3 passen nicht zum Auftrag 10.7. Das erste Fertigungsobjekt 20.11 der Fertigungsobjekt-Abfolge 70 paßt ebenfalls nicht zum Auftrag 10.7. Weil im Sortierpuffer 500.3 keine freien Plätze mehr verfügbar sind, verbleibt der Auftrag 10.7 im Zwischenspeicher 400.3. Auch der nächste Auftrag 10.9 wird zunächst mit den drei Fertigungsobjekten im Sortierpuffer 500.3 verglichen, jedoch paßt er zu keinem von ihnen. Hingegen paßt der Auftrag 10.9 zum ersten Fertigungsobjekt 20.11 der Fertigungsobjekt-Abfolge 70. Daher werden 10.9 und 20.11 ausgewählt. Der ausgewählte Auftrag 10.9 hat eine Relativ-Position von +1.

Fig. 5 zeigt als Momentaufnahme die Fertigungsobjekte und Aufträge im Ausführungsbeispiel nach dem achten Auswahlvorgang.

Zum Zeitpunkt T_8 = T_0 + 8*T wird zunächst der im Zwischenspeicher 400.3 befindliche Auftrag 10.7 mit dem nächsten Fertigungsobjekt 20.12 verglichen, jedoch passen diese beiden nicht zueinander. Daher verbleibt der Auftrag 10.7 im Zwischenspeicher 400.3. Der nächste Auftrag 10.10 paßt zwar zum Fertigungsobjekt 20.13 der Fertigungsobjekt-Abfolge 70, aber nicht zum nächsten Fertigungsobjekt 20.12. Da das passende Fertigungsobjekt 20.13 nicht auf den ersten Platz vorgezogen werden kann, wird der Auftrag 10.10 ebenfalls in den Zwischenspeicher 400.3 eingestellt. Der nächste Auftrag 10.11 paßt zum nächsten Fertigungsobjekt 20.12. Daher werden 10.11 und 20.12 ausgewählt. Der ausgewählte Auftrag 10.11 hat eine Relativ-Position von +2.

Zum Zeitpunkt T_9 = T_0 + 9*T wird festgestellt, daß sich im Zwischenspeicher 400.3 zwei Aufträge befinden. Der Auftrag 10.7 verweilt bereits zwei Auswahlvorgänge lang im Zwischenspeicher, der Auftrag 10.10 noch keinen. Daher wird zunächst der Auftrag 10.7 mit dem nächsten Fertigungsobjekt 20.13 verglichen, die beiden passen aber nicht zusammen. Der Auftrag 10.10 paßt hingegen zum Fertigungsobjekt 20.13. Daher werden 10.10 und 20.13 ausgewählt, und der Auftrag 10.10 wird dem Zwischenspeicher 400.3 entnommen. Der ausgewählte Auftrag 10.10 hat eine Relativ-Position von 0.

Fig. 6 zeigt als Momentaufnahme die Fertigungsobjekte und Aufträge im Ausführungsbeispiel nach dem zehnten Auswahlvorgang.

Zum Zeitpunkt T_10 = T_0 + 10*T wird festgestellt, daß sich der Auftrag 10.7 bereits drei Auswahlvorgänge lang im Zwischenspeicher 400.3 befindet. Damit ist eine obere Schranke erreicht, und der Auftrag wird bevorzugt behandelt. Das passende Fertigungsobjekt 20.15 läßt sich nicht mit Hilfe des Sortierpuffers 500.3 auf den ersten Platz vorziehen, weil keine freien Plätze verfügbar sind. Eine der folgenden Verfahrensschritte wird daher ausgeführt, um fortzufahren:

- Ein Fertigungsobjekt im Sortierpuffer 500.3 und der nächste zu ihm passender Auftrag der Kopie 60 werden ausgewählt. Dadurch wird ein Platz im Sortierpuffer 500.3 frei, und das zum Auftrag 10.7 passende Fertigungsobjekt 20.15 kann auf den ersten Platz vorgezogen werden.

- Eine Vorgehensweise wird angewendet, um das Fertigungsobjekt 20.15 vorzuziehen und dem Teilprozeß 100.3 zuzuführen, ohne den Sortierpuffer 500.3 zu benutzen. Beispielsweise wird das Fertigungsobjekt 20.15 aus der Fertigungsobjekt-Abfolge 70 ausgeschleust und mit Hilfe einer bemannten Transportvorrichtung vorgezogen und dem Teilprozeß 100.3 zugeführt.

- Der Auftrag 10.7 und das Fertigungsobjekt 20.13 werden ausgewählt, obwohl der ausgewählte Auftrag 10.7 und das ausgewählte Fertigungsobjekt 20.13 nicht zusammenpassen. Diese Alternative wird nur dann durchgeführt, wenn das ausgewählte Fertigungsobjekt nachträglich zum ausgewählten Auftrag passend gemacht werden kann. Dies ist vor allem dann der Fall, wenn das Fertigungsobjekt nur deshalb nicht zum Auftrag paßt, weil ein Teilsystem für das Fertigungsobjekt zu spät zugeliefert wird und anstelle im Teilprozeß 100.2 im nachfolgenden Teilprozeß 100.3 eingebaut wird.

- Die Auswahl des Auftrags 10.7 wird rückgängig gemacht, und der Auftrag 10.7 wird als nicht innerhalb der maximal zulässigen Wartezeit dem Teilprozeß 100.3 zuführbar markiert. Der Auftrag 10.7 wird an die Fahrzeug-Einplanung (Teilprozeß 100.1) zurückgeführt. Dort wird er erneut eingeplant. Vorzugsweise wird zuvor geprüft, ob seine Fertigung prinzipiell möglich ist oder gegenwärtig z. B. aufgrund eines Ausfalls nicht möglich ist. Falls z. B. der Auftrag 10.7 Allradantrieb vorsieht und die Produktion oder Zulieferung von Allradantrieben zur Zeit völlig ausgefallen ist, wird der Auftrag 10.7 nicht eingeplant, bis der Ausfall der Produktion von Allradantrieben behoben ist.

Für den Teilprozeß 100.3 ist die dritte Alternative technisch nicht realisierbar. Die vierte Alternative würde dazu führen, daß ein Produkt gemäß des Auftrags 10.7 sehr viel später als vereinbart fertiggestellt werden würde. Die zweite Alternative ist aber oft gar nicht durchführbar oder ist aufwendig und wird daher selten angewendet. Die erste Alternative führt dazu, daß der Auftrag 10.7 mit einer noch größeren Verspätung gegenüber der geplanten Reihenfolge bearbeitet wird. Weil für die erste Alternative aber nur ein Fertigungsobjekt aus dem Sortierpuffer 500.3 entfernt werden muß, wird zunächst die erste Alternative erprobt. In dieser Situation wird also nicht nur der nächste, sondern auch der übernächste Auswahlvorgang geplant.

Festgestellt wird, daß der Auftrag 10.12 zu keinem Fertigungsobjekt im Sortierpuffer 500.3 paßt. Hingegen paßt das Fertigungsobjekt 20.5 im Sortierpuffer 500.3 zum Auftrag 10.13. Daher werden das Fertigungsobjekt 20.5 und der Auftrag 10.13 ausgewählt. Das Fertigungsobjekt 20.5 wird dem Sortierpuffer 500.3 entnommen und dem Teilprozeß 100.3 zugeführt. Der ausgewählte Auftrag 10.13 hat eine Relativ-Position von +2. Der Auftrag 10.12 wird in den Zwischenspeicher 400.3 eingestellt.

Zum Zeitpunkt $T\_11 = T\_0 + 11*T$ wird die bereits zuvor festgelegte Abfolge ausgeführt. Das Fertigungsobjekt 20.14 wird in den Sortierpuffer eingestellt. Der Auftrag 10.7 und das Fertigungsobjekt 20.15 werden ausgewählt. Der Auftrag 10.7 wird dem Zwischenspeicher 400.3 entnommen. Der ausgewählte Auftrag 10.7 hat eine Relativ-Position von -5.

Zum Zeitpunkt $T\_12 = T\_0 + 12*T$ wird der verbleibende Auftrag 10.12 im Zwischenspeicher 400.3 zunächst mit den drei Fertigungsobjekten im Sortierpuffer 500.3 verglichen. Festgestellt wird, daß der Auftrag 10.12 zum Fertigungsobjekt 20.6 paßt. Daher werden 10.12 und 20.6 ausgewählt. Der Auftrag 10.12 wird dem Zwischenspeicher 400.3 entnommen, das Fertigungsobjekt 20.6 dem Sortierpuffer 500.3.

Fig. 7 zeigt die nunmehr erreichte Situation.

Zum Zeitpunkt $T\_13 = T\_0 + 13*T$ wird festgestellt, daß der Auftrag 10.14 zum Fertigungsobjekt 20.8 paßt. Daher werden beide ausgewählt, und 20.8 wird dem Sortierpuffer 500.3 entnommen. Zum Zeitpunkt $T\_14 = T\_0 + 14*T$ wird festgestellt, daß der Auftrag 10.15 zum Fertigungsobjekt 20.14 paßt. Daher werden beide ausgewählt, und 20.14 wird dem Sortierpuffer 500.3 entnommen. In diesem Beispiel ist damit die Kopie 60 der Auftrags-Abfolge 50 und damit auch die Auftrags-Abfolge 50 abgearbeitet.

Die folgende Tabelle veranschaulicht die Abfolge der Auswahlvorgänge. Eingetragen sind die Figuren, die die jeweils erreichte Situation zeigen. Hierbei bedeuten:

- Zeitpkt.: Nummer i des Auswahlzeitpunkts $T\_i$

- 1. Auftrag: erster Auftrag in der Kopie 60 der Auftrags-Abfolge 50 vor Durchführung des Auswahlvorgangs Nr. i,

- 1. FO: erstes Fertigungsobjekt in der Fertigungsobjekt-Abfolge 70 vor Durchführung des Auswahlvorgangs Nr. i,

- Inhalt Zwischenspeicher: Inhalt des elektronischen Zwischenspeichers 400.3 nach Durchführung des Auswahlvorgangs Nr. i, wobei die jeweilige Verweildauer in eckigen Klammern angegeben ist,

- Inhalt Sortierpuffer: Inhalt des Sortierpuffers 500.3 nach Durchführung des Auswahlvorgangs Nr. i,

- ausgew. Auftrag: der im Auswahlvorgang Nr. i aus der Kopie ausgewählter Auftrag,

- ausgew. FO: das im Auswahlvorgang Nr. i aus der Fertigungsobjekt-Abfolge 70 ausgewähltes Fertigungsobjekt,

- Rel-Pos: Relativ-Position des ausgewählten Auftrags.

| Zeit pkt. | 1. Auftrag | 1. FO | Inhalt Zwischenspeicher | Inhalt Sortierpuffer | ausgew. Auftrag | ausgew. FO | Rel-Pos |
|---|---|---|---|---|---|---|---|
| 0 | 10.1 | 20.1 | ./. | ./. | 10.1 | 20.1 | 0 |
| Fig. 2 | | | | | | | |
| 1 | 10.2 | 20.2 | ./. | 20.2, 20.3 | 10.2 | 20.4 | 0 |
| Fig. 3 | | | | | | | |
| 2 | 10.3 | 20.5 | ./. | 20.3 | 10.3 | 20.2 | 0 |
| 3 | 10.4 | 20.5 | ./. | ./. | 10.4 | 20.3 | 0 |
| 4 | 10.5 | 20.5 | 10.5 [0] | 20.5, 20.6 | 10.6 | 20.7 | +1 |
| Fig. 4 | | | | | | | |
| 5 | 10.7 | 20.8 | ./. | 20.5, 20.6, 20.8 | 10.5 | 20.9 | -1 |
| 6 | 10.7 | 20.10 | 10.7 [0] | 20.5, 20.6, 20.8 | 10.8 | 20.10 | +1 |
| 7 | 10.9 | 20.11 | 10.7 [1] | 20.5, 20.6, 20.8 | 10.9 | 20.11 | +1 |
| Fig. 5 | | | | | | | |
| 8 | 10.10 | 20.12 | 10.7 [2], 10.10 [0] | 20.5, 20.6, 20.8 | 10.11 | 20.12 | +2 |
| 9 | 10.12 | 20.13 | 10.7 [3] | 20.5, 20.6, 20.8 | 10.10 | 20.13 | 0 |
| Fig. 6 | | | | | | | |
| 10 | 10.12 | 20.14 | 10.7 [4], 10.12 [0] | 20.6, 20.8 | 10.13 | 20.5 | +2 |
| 11 | 10.14 | 20.14 | 10.12 [1] | 20.6, 20.8, 20.14 | 10.7 | 20.15 | -5 |
| 12 | 10.14 | ./. | ./. | 20.8, 20.14 | 10.12 | 20.6 | -1 |

(fortgesetzt)

| Fig. 7 | | | | | | | |
|---|---|---|---|---|---|---|---|
| 13 | 10.14 | ./. | ./. | 20.14 | 10.14 | 20.8 | 0 |
| 14 | ./. | ./. | ./. | ./. | 10.15 | 20.14 | 0 |

In diesem Beispiel wurden 4 der 15 Aufträge in den Zwischenspeicher eingestellt, und 7 der 15 Aufträge weisen weder einen Vorgriff noch einen Nachgriff auf, sondern sind positionstreu.

Wie oben bereits beschrieben, wird für jeden Auftrag und jedes Fertigungsobjekt ein Datensatz in einer Datenbank erzeugt. Ein industrietauglicher Produktionsleitrechner hat Lese- und Schreibzugriff auf diese Datenbank. Möglich ist es, jeden elektronischen Zwischenspeicher als eigene Datenbank zu realisieren und Datensätze real zu kopieren. Rechenzeit und Speicherkapazität werden eingespart, wenn keine Datensätze kopiert werden, sondern das Verfahren dadurch realisiert wird, daß zusätzliche Datenfelder angelegt und verändert werden. Dies wird im folgenden beschrieben.

Jeder Datensatz für einen Auftrag umfaßt folgende Datenfelder:

- Datenfelder für die oben beschriebenen Festlegungen des Kraftfahrzeugs, das aufgrund des Auftrags zu fertigen ist, z. B. Farbe der Lackierung und gewünschte Sonderausstattungen,

- Soll-Position, das ist die Position des Auftrags in der Auftrags-Reihenfolge 50,

- eine Kennung desjenigen Fertigungsobjekts, das aktuell aufgrund des Auftrags bearbeitet wird,

- eine Kennung desjenigen Teilprozesses, in dem ein Fertigungsobjekt gemäß dem Auftrag aktuell bearbeitet wird

- Ist-Position, das ist die Position des Auftrags in der Kopie 60 der Auftrags-Reihenfolge,

- eine Kennung desjenigen elektronischen Zwischenspeichers, in dem sich der Auftrag aktuell befindet,

- für jeden Teilprozeß die beiden Soll-Zeitpunkte, an dem gemäß der Fahrzeug-Einplanung die Bearbeitung eines Fertigungsobjekts gemäß des Auftrags begonnen bzw. beendet werden soll,

- für jeden Teilprozeß die beiden Ist-Zeitpunkte, an dem die Bearbeitung eines Fertigungsobjekts gemäß des Auftrags tatsächlich begonnen bzw. beendet wurde.

Die Auswahlvorgänge werden vorteilhafterweise in jedem Auswahlpunkt protokolliert. Hierbei wird jeweils protokolliert, welcher Auftrag und welches Fertigungsobjekt ausgewählt werden. Das Protokoll, das in einem Auswahlpunkt 200.x erzeugt wird, umfaßt also eine Abfolge von Paaren, die jeweils aus einem Auftrag und einem zum Auftrag passenden Fertigungsobjekt. Die Informationen über einen Auftrag umfassen eine eindeutige Kennung und. Die Informationen über ein Fertigungsobjekt umfassen ebenfalls eine eindeutige Kennung sowie die Ausprägungen des Fertigungsobjekts bezüglich aller Merkmale, die in einem der Teilprozesse vor dem Auswahlpunkt 200.x bearbeitet wurden und daher zur oben beschriebenen Bearbeitungs-Teilmenge eines dieser Teilprozesse gehört.

Ein Datensatz für ein Fertigungsobjekt umfaßt folgende Datenfelder:

- eine Kennung desjenigen Teilprozesses, in dem das Fertigungsobjekt aktuell bearbeitet wird,

- eine Kennung des Auftrags, aufgrund dessen das Fertigungsobjekt aktuell bearbeitet wird,

- Position des Fertigungsobjekts in der Fertigungsobjekt-Abfolge 70,

- eine Kennung des Sortierpuffers, in dem sich das Fertigungsobjekt aktuell befindet

Wenn ein Auftrag vor einem Teilprozeß "wartet", also ein Fertigungsobjekt aufgrund des Auftrags in einem vorhergehenden Teilprozeß bearbeitet wurde und das Fertigungsobjekt den vorhergehenden Teilprozeß verlassen hat, aber noch nicht für den nächsten Teilprozeß ausgewählt wurde, wird derjenige Teilprozeß notiert, vor dem der Auftrag wartet. Das Datenfeld für einen elektronischen Zwischenspeicher ist natürlich nur dann gefüllt, wenn ein Auftrag der Kopie in den elektronischen Zwischenspeicher eingestellt wurde. Nach der Entnahme des Auftrags aus dem elektronischen Zwischenspeicher wird das Datenfeld für den Zwischenspeicher geleert.

Im Beispiel der Fig. 4 ist die Soll-Position des Auftrags 10.1 die 1, die des Auftrags 10.2 die 2 und so fort. Die Ist-Position des Auftrags 10.1 ist die 1, die des Auftrag 10.2 die 4, die des Auftrag 10.4 die 2 und so fort. Der Auftrag 10.3 besitzt nach dem vierten Auswahlvorgang keine Soll-Position. Im entsprechenden Datenfeld ist eine Kennung des Zwischenspeichers 400.3 notiert.

Bei der Durchführung eines Auswahlvorgangs durchsucht der Produktionsleitrechner die Datensätze für Aufträge und sucht jeweils nach einem Fertigungsobjekt und einem Auftrag, die zueinander passen. Sind diese gefunden, wird im Datensatz für den ausgewählten Auftrag eine Kennung des ausgewählten Fertigungsobjekts notiert. Umgekehrt wird im Datensatz für das ausgewählte Fertigungsobjekt eine Kennung des ausgewählten Auftrags notiert. Die Datenfelder "Ist-Position" des Auftrags-Datensatzes und "Position" des Fertigungsobjekts werden mit den aktuellen Werten gefüllt. Die Kopie der Auftrags-Abfolge wird dadurch gebildet, daß die Datenfelder "Ist-Position" der Auftrags-Datensätze gefüllt und verändert werden. Sobald ein Auftrag den "Taufpunkt" 300 erreicht hat, sind die Werte in "Ist-Position" und "Soll-Position" identisch, so daß nur noch der Wert von "Soll-Position" benötigt wird.

Vorzugsweise werden die Datenfelder "Ist-Position", "Ist-Zeitpunkte", "elektronischer Zwischenspeicher" und "Fertigungsobjekt der Auftrags-Datensätze sowie "Position" und "Auftrag" der Fertigungsobjekt-Datensätze regelmäßig geleert und mit den aktuellen Werten beschrieben. Diese aktuellen Werte werden zuvor ermittelt. Dadurch wird regelmäßig ein definierter Aufsetzpunkt geschaffen. Beispielsweise wird jede Nacht eine vorbeugende Instandhaltung des gesamten Fertigungsprozesses durchgeführt. Während dieser Instandhaltung werden die gerade genannten Datenfelder geleert und mit den ermittelten aktuellen Werten gefüllt.

Durch automatische Auswertung des Protokolls, das im Auswahlpunkt 200.x erzeugt wird, läßt sich die im folgenden beschriebene Positions-Güte des vorhergehenden Teilprozesses ermitteln.

Durch automatische Auswertung des Protokolls aus dem Auswahlpunkt 200.3 läßt sich z. B. die Positions-Güte des Teilprozesses 100.2 ermitteln. Die Reihenfolge der Aufträge in der Auftrags-Abfolge vor dem Teilprozeß 100.2 wird verglichen mit der Reihenfolge nach dem Teilprozeß 100.2. In der bevorzugten Ausführungsform wird im Auswahlpunkt 200.3 eine Kopie 60 der Auftrags-Abfolge 50 erzeugt. Die Original-Auftrags-Abfolge wird durch die Auswahlvorgänge im Auswahlpunkt 200.3 nicht verändert, sondern nur die Kopie. Daher wird die nach Durchführung der Auswahlvorgänge die Kopie mit dem Original verglichen.

In dem Beispiel, das durch Fig. 2 bis Fig. 7 illustriert wird, haben die ausgewählten Aufträge nach Verlassen des Sortierpuffers 500.3 folgende Relativ-Positionen, die durch Vergleich der Kopie 70 mit dem Original 60 ermittelt werden:

| Auftrag | Relativ-Position |
|---------|------------------|
| 10.1 | 0 |
| 10.2 | 0 |
| 10.3 | 0 |
| 10.4 | 0 |
| 10.5 | -1 |
| 10.6 | +1 |
| 10.7 | -5 |
| 10.8 | +1 |
| 10.9 | +1 |
| 10.10 | 0 |
| 10.11 | +2 |
| 10.12 | -1 |
| 10.13 | +2 |
| 10.14 | 0 |
| 10.15 | 0 |

Der größte Vorgriff, das ist die größte Relativ-Position, beträgt in diesem Beispiel +2 Positionen. Weil in diesem Beispiel der Sortierpuffer nur drei Fertigungsobjekte aufnehmen kann, ist der Vorgriff nach oben durch 3 beschränkt.

Der größte Nachgriff, das ist der Betrag der kleinsten Relativ-Position, beträgt 5 Positionen.

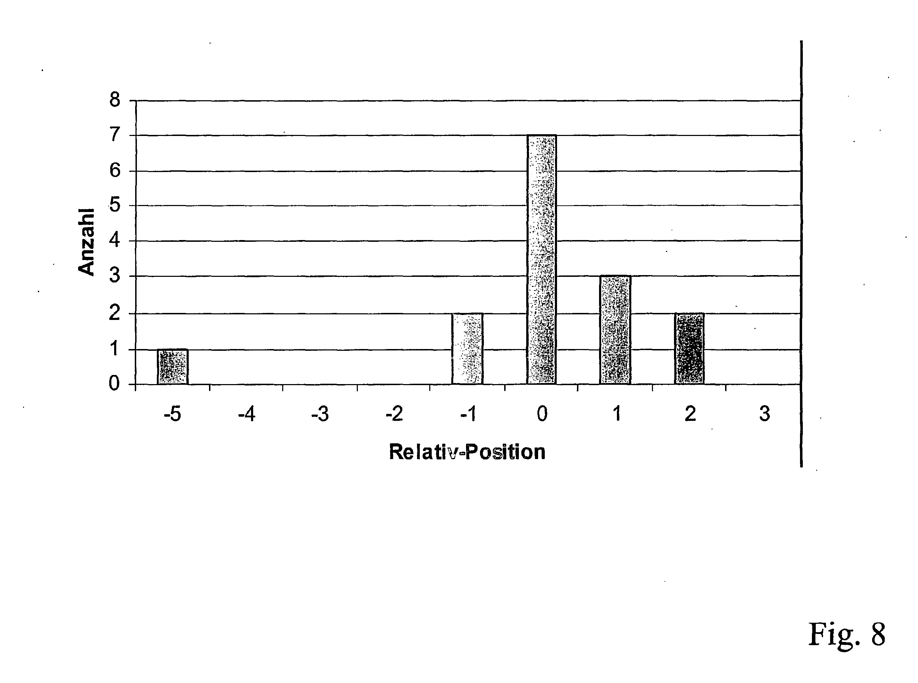

Die mit dem Sortierpuffer 500.3 erreichbare Positions-Güte läßt sich durch ein Histogramm darstellen. Fig. 8 zeigt ein solches Histogramm für die 14 Auswahlvorgänge, die durch Fig. 2 bis Fig. 7 und die obenstehende Tabelle veranschaulicht werden. Weil die Fertigungsobjekte in Taktfertigung bearbeitet werden und eine feste Taktzeit von z. B. 2 min vorgegeben ist, läßt sich aus dem Histogramm ein Vorgriff und ein Nachgriff in Minuten berechnen. Ein Vorgriff von 2 Positionen entspricht einem Vorgriff von 2 * 2 min = 4 Minuten, ein Nachgriff von 5 Positionen einem Nachgriff von 5 * 2 min = 10 Minuten.

Die wie oben beschriebenen erzeugten Protokolle für einen Referenz-Typ von Fertigungsobjekten werden verwendet, um für einen später produzierten Typ die Sortierpuffer zu dimensionieren. Dies wird am Beispiel des Auswahlpunktes 200.3 mit dem Sortierpuffer 500.3 beschrieben. Verwendet wird ein Protokoll mit der Original-Auftrags-Abfolge 50 und der Abfolge 70 von Fertigungsobjekten in der Reihenfolge, in der die Fertigungsobjekte den vorhergehenden Teilprozeß 100.2 verlassen haben. Die protokollierte Original-Abfolge fungiert als Referenz-Abfolge von Referenz-Aufträgen. Die protokollierte Abfolge 70 der Fertigungsobjekte fungiert als elektronisches Abbild der Referenz-Fertigungsobjekt-Abfolge.

In diesem Beispiel sind folgende mögliche Werte für die Höchstanzahl verfügbarer Plätze des Sortierpuffers 500.3 für Fertigungsobjekte vorgegeben: 0, 3, 6 und 9 Plätze. Ein elektronisch verfügbares Modell des Sortierpuffers 500.3 wird erzeugt. Dieses Modell läßt sich auf eine vorgegebene Höchstanzahl verfügbarer Plätze einstellen.

Für jeden der vorgegebenen möglichen Werte wird eine Simulation durchgeführt. In dieser Simulation werden das Modell des Sortierpuffers 500.3 und der elektronische Zwischenspeicher 400.3 verwendet.

Die Simulation für 3 Stellplätze verläuft genauso wie oben dargestellt. Die folgende Tabelle erläutert die Simulation für 0 Stellplätze, also den Fall, daß überhaupt kein Sortierpuffer vorgesehen ist. In dieser Simulation wird folgende Strategie bei den Auswahlverfahren angewendet:

- Zunächst werden die Aufträge im Zwischenspeicher mit dem ersten Fertigungsobjekt der Fertigungsobjekt-Abfolge 70 verglichen. Falls hierbei ein Auftrag, der zum ersten Fertigungsobjekt paßt, gefunden wird, so werden diese ausgewählt, und der Auftrag wird dem Zwischenspeicher entnommen.

- Ansonsten wird das erste Fertigungsobjekt der Fertigungsobjekt-Abfolge 70 mit den Aufträgen der Auftrags-Abfolge verglichen. Das erste Fertigungsobjekt und der erste passende Auftrag werden ausgewählt. Alle Aufträge vor dem ersten passenden werden in den Zwischenspeicher eingestellt. Falls bereits der erste Auftrag zum ersten Fertigungsobjekt paßt, wird kein Auftrag in den Zwischenspeicher eingestellt.

- Verfahren, um ohne einen Sortierpuffer ein Fertigungsobjekt auf den ersten Platz vorzuziehen, werden in der Simulation nicht angewendet.

| Zeit pkt. | 1. Auftrag | 1. FO | Inhalt Zwischenspeicher | Inhalt Sortierpuffer | ausgew. Auftrag | ausgew. FO | Rel-Pos |
|---|---|---|---|---|---|---|---|
| 0 | 10.1 | 20.1 | ./. | ./. | 10.1 | 20.1 | 0 |
| 1 | 10.2 | 20.2 | 10.2 [0] | ./. | 10.3 | 20.2 | +1 |
| 2 | 10.4 | 20.3 | 10.2 [1] | ./. | 10.4 | 20.3 | +1 |
| 3 | 10.5 | 20.4 | ./. | ./. | 10.2 | 20.4 | -2 |
| 4 | 10.5 | 20.5 | 10.5 [0], ... 10.12 [0] | ./. | 10.13 | 20.5 | +8 |
| 5 | 10.14 | 20.6 | 10.5 [1], ... 10.11 [1] | ./. | 10.12 | 20.6 | +6 |
| 6 | 10.14 | 20.7 | 10.5 [2], 10.7 [2], ... 10.11 [2] | ./. | 10.6 | 20.7 | -1 |
| 7 | 10.14 | 20.8 | 10.5 [3], | ./. | 10.14 | 20.8 | +6 |

(fortgesetzt)

| Zeit pkt. | 1. Auftrag | 1. FO | Inhalt Zwischenspeicher | Inhalt Sortierpuffer | ausgew. Auftrag | ausgew. FO | Rel-Pos |
|---|---|---|---|---|---|---|---|
| | | | 10.7 [3], ... 10.11 [3] | | | | |
| 8 | 10.15 | 20.9 | 10.7 [4], ... 10.11 [4] | ./. | 10.5 | 20.9 | -4 |
| 9 | 10.15 | 20.10 | 10.7 [5], 10.9 [5], ... 10.11 [5] | ./. | 10.8 | 20.10 | -2 |
| 10 | 10.15 | 20.11 | 10.7 [5], 10.10 [5], 10.11 [5] | ./. | 10.9 | 20.11 | -2 |
| 11 | 10.15 | 20.12 | 10.7 [6], 10.10 [6] | ./. | 10.11 | 20.12 | -1 |
| 12 | 10.15 | 20.13 | 10.7 [6] | ./. | 10.10 | 20.13 | -3 |
| 13 | 10.15 | 20.14 | 10.7 [7] | ./. | 10.15 | 20.14 | +1 |
| 14 | ./. | 20.15 | ./. | ./. | 10.7 | 20.15 | -8 |

In diesem Beispiel wurden 14 der 15 Aufträge in den Zwischenspeicher eingestellt, und nur einer der Aufträge weist weder einen Vorgriff noch einen Nachgriff auf, sondern ist positionstreu. Die Simulation liefert als Nebenergebnis die Güte des Teilprozesses 100.2 ohne den Sortierpuffer 500.3, weil u. a. maximaler Nachgriff und Vorgriff sowie durchschnittliche Positionstreue ermittelt werden.

Für jeden der vorgegebenen möglichen Werte werden durch die Simulationen folgende Qualitäts-Kenngrößen ermittelt:

-    der größte Wert aller Relativ-Positionen,

-    der kleinste Wert aller Relativ-Positionen,

-    der Mittelwert aller Relativ-Positionen

-    und die Reihenfolge-Güte, das ist der Anteil derjenigen Aufträge, deren Relativ-Position gleich 0 ist und die positionstreu sind, an der Gesamtanzahl der Aufträge.

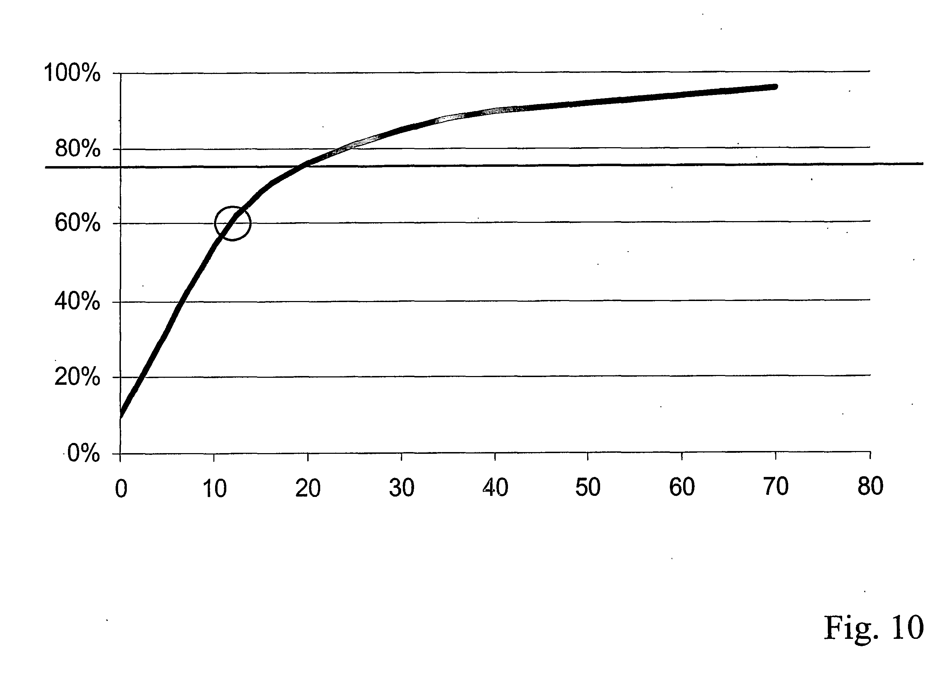

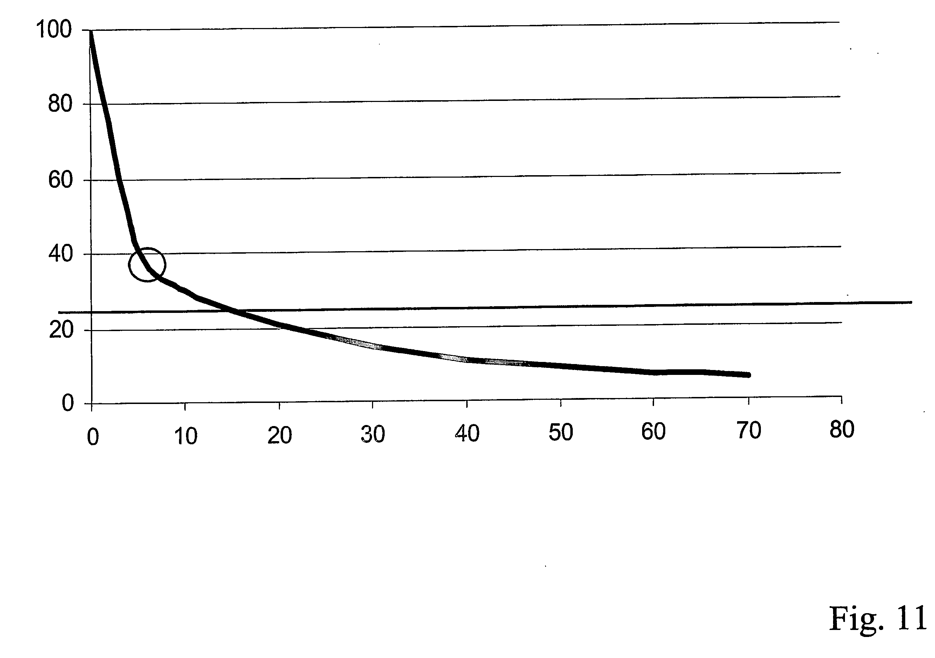

Fig. 10 zeigt die Reihenfolge-Güte als Funktion der Anzahl von Plätzen im Sortierpuffer 500.3. Auf der x-Achse ist in Fig. 10 die Anzahl verfügbarer Plätze des Sortierpuffers eingetragen, auf der y-Achse die jeweils resultierende Reihenfolge-Güte. Fig. 11 zeigt den maximale Nachgriff als Funktion der Anzahl verfügbarer Plätze des Sortierpuffers 500.3. Auf der x-Achse ist in Fig. 11 die Anzahl verfügbarer Plätze des Sortierpuffers eingetragen, auf der y-Achse der jeweils resultierende maximale Nachgriff.

Auf einer dieser Funktionen wird ein Arbeitspunkt ausgewählt. Durch die Auswahl wird eine Anzahl verfügbarer Plätze festgelegt. Vorzugsweise ist eine untere Schranke für die Reihenfolge-Güte vorgegeben, z. B. 75%, oder eine obere Schranke für den maximalen Nachgriff, z. B. 25 Relativ-Positionen. Weil die Anschaffung und der Betrieb des Sortierpuffers um so teurer ist und der Sortierpuffer um so mehr Platz wegnimmt, desto mehr Plätze er hat, wird er mit so wenigen Plätzen wie möglich ausgelegt. Vorzugsweise wird dann, wenn eine untere Schranke für die Reihenfolge-Güte vorgegeben ist, ein Arbeitspunkt möglichst nahe der unteren Schranke gewählt. Entsprechend wird dann, wenn eine obere Schranke für den maximalen Nachgriff vorgegeben ist, ein Arbeitspunkt möglichst nahe der oberen Schranke gewählt. Ein alternatives Vorgehen ist das, einen Arbeitspunkt auszuwählen, in dem die Steigung der Funktion annähernd 45 Grad bzw. -45 Grad beträgt. Dieser Arbeitspunkt wird deshalb gewählt, weil er zu einem guten Kompromiß zwischen der Anforderung nach großer Reihenfolge-Güte bzw. geringem maximalen Nachgriff und der Anforderung nach möglichst wenig Plätzen führt.

In Fig. 10 ist durch die waagrechte Linie eine obere Schranke für die Reihenfolge-Güte bei 75% dargestellt, durch den Kreis ein Arbeitspunkt mit einer Steigung von annähernd 45 Grad. Durch Vorgabe der oberen Schranke von 75% wird eine Anzahl von mindestens 20 Plätzen ermittelt. Vorzugsweise wird festgelegt, daß der Sortierpuffer genau 20 Plätze hat. Die Auswahl eines Arbeitspunktes mit einer Steigung von annähernd 45 Grad führt zu einer Anzahl von 12 Plätzen und einer resultierenden Reihenfolge-Güte von 60%. In Fig. 11 ist durch die waagrechte Linie eine obere Schranke für den maximalen Nachgriff von 25 Relativ-Positionen dargestellt, durch den Kreis ein Arbeitspunkt mit einer Steigung von annähernd 45 Grad. Durch Vorgabe der oberen Schranke von 25 Relativ-Positionen wird eine Anzahl von mindestens 16 Plätzen ermittelt. Vorzugsweise wird festgelegt, daß der Sortierpuffer genau 16 Plätze hat. Die Auswahl eines Arbeitspunktes mit einer Steigung von annähernd 45 Grad führt zu einer Anzahl von 8 Plätzen und einem resultierenden maximalen Nachgriff von 38 Relativ-Positionen.

In der bislang beschriebenen Ausführungsform wurde die Abfolge von Referenz-Aufträgen und die Abfolge von Referenz-Fertigungsobjekten unverändert für die Simulation verwendet. Eine Abwandlung dieses Vorgehens berücksichtigt die Möglichkeit, daß der Referenz-Typ sich vom Produkt-Typ, dessen Produktion mit Hilfe des auszulegenden Sortierpuffers verbessert werden soll, unterscheidet. Dieser Unterschied wird dadurch berücksichtigt, daß die beiden Referenz-Abfolgen verändert werden, bevor für jeden der möglichen Werte von Plätzen je eine Simulation durchgeführt wird. Mindestens eine der folgenden Abänderungen wird vorgenommen:

- Mit Hilfe eines Zufallszahlengenerators werden einzelne Referenz-Aufträge und dazu passende Referenz-Fertigungsobjekte ausgewählt, und mindestens ein Merkmal wird in beiden Datensätzen geändert, das im Teilprozeß 100.2 hergestellt wurde und daher zur Bearbeitungs-Teilmenge des Teilprozesses gehören. Beispielsweise gehören zum Referenz-Typ nur Fahrzeuge für Europa und Nordamerika, zum Produkt-Typ hingegen auch Fahrzeuge für Japan. Das Merkmal "Kennzeichen-Mulde im Heckdeckel" hat beim Referenz-Typ nur die Ausprägung "große Kennzeichen-Mulde", beim Produkt-Typ hingegen die beiden möglichen Ausprägungen "große Kennzeichen-Mulde" und "kleine Kennzeichen-Mulde". Zufällig werden einzelne Referenz-Aufträge und dazu passende Referenz-Fertigungsobjekte ausgewählt und mit der Ausprägung "kleine Kennzeichen-Mulde" versehen.

- Mit Hilfe eines Zufallszahlengenerators werden einzelne Referenz-Aufträge ausgewählt, und mindestens ein Merkmal wird in den Datensätzen der ausgewählten Referenz-Aufträge abgeändert. Dieses Merkmal gehört zur Auswahl-Teilmenge des Teilprozesses 100.3. Beispielsweise ist das Merkmal die Farbe des Decklacks. Der Referenz-Typ besitzt nur 16 mögliche Farben, also Ausprägungen des Merkmals "Farbe des Decklacks", der Produkt-Typ hingegen 24 mögliche Farben. Vorgegeben ist eine relative Häufigkeit jeder dieser 24 möglichen Farben. Die Ausprägungen des Merkmals "Farbe des Decklacks" in den Datensätzen des Referenz-Typs wird so abgewandelt, daß die Verteilung der Decklack-Farben unter den abgewandelten Datensätzen annähernd der relativen Häufigkeiten gleicht.

- Die Bearbeitung im Teilprozeß 100.2 wird so verbessert, daß bereits ohne Sortierpuffer der maximale Vorgriff und der maximale Nachgriff der Aufträge bei Zuführung zum Teilprozeß 100.3 besser ist als beim Referenz-Typ. Beispielsweise wird eine Vorgehensweise angewendet, um dann, wenn ein Auftrag bereits einen bestimmten Nachgriff hat, ein zum Auftrag passendes Fertigungsobjekt vorzuziehen und dem Teilprozeß 100.3 zuzuführen, ohne den Sortierpuffer 500.3 zu benutzen. Die Auswirkungen derartiger Maßnahmen werden in der Simulation dadurch berücksichtigt, daß die Reihenfolge der Referenz-Fertigungsobjekte in der Referenz-Abfolge abgeändert wird, so daß bereits ohne Sortierpuffer eine vorgegebene obere Schranke für den Nachgriff und den Vorgriff eingehalten wird. Falls beispielsweise eine obere Schranke von 5 Positionen für Nachgriff und Vorgriff vorgegeben ist und ein Auftrag bereits einen Nachgriff von 5 Positionen hat, so werden in der Simulation der Auftrag und ein zum Auftrag passendes Fertigungsobjekt ausgewählt. Dadurch wird das ausgewählte Fertigungsobjekt auf den ersten Platz der Referenz-Abfolge vorgezogen.

Eine Fortbildung dieses Verfahrens ermöglicht es, verschiedene Variantenspektren unter dem Produkt-Typ zu vergleichen. Beispielsweise werden zwei Funktionen erzeugt: eine für ein Variantenspektrum mit 16 verschiedenen Decklack-Farben, eine weitere für ein Variantenspektrum mit 24 verschiedenen Decklack-Farben. Erzeugt werden zwei Funktionen der Reihenfolge-Güte und zwei Funktionen des maximalen Vorgriffs jeweils als Funktion der Anzahl verfügbarer Plätze. Eine graphische Darstellung zeigt eine Kurvenschar. Entsprechend ist es möglich zu ermitteln, welche Auswirkungen eine Verbesserung der Positions-Güte im Teilprozeß 100.2 auf die Reihenfolge-Güte, die durch den Sortierpuffer 500.3 erzielt wird, hat. Erzeugt werden zwei Funktionen der Reihenfolge-Güte und zwei Funktionen des maximalen Vorgriffs, nämlich eine bei unveränderter und eine bei verbesserter Positions-Güte.

**EP 1 616 227 B1**

Bezugszeichenliste

| Zeichen | Bedeutung |
|---|---|
| 10.1, 10.2, 10.3, ... | Aufträge der Kopie der Auftrags-Abfolge 60 |
| 11.1, 11.2, 11.3, ... | Aufträge der Original-Auftrags-Abfolge 50 |
| 20.1, 20.2, 20.3, ... | Fertigungsobjekt-Abfolge nach dem Teilprozeß 100.2 |
| 50 | Original-Auftrags-Abfolge |
| 60 | Kopie der Auftrags-Abfolge |
| 70 | Fertigungsobjekt-Abfolge |
| 100.1, 100.2, ... | Gewerke des Fertigungsprozesses als Teilprozesse |
| 100.1 | Gewerk Vorlauf-Logistik |
| 100.2 | Gewerk Rohbau |
| 100.3 | Gewerk Oberfläche |
| 100.4 | Gewerk Produktions-Logistik |
| 100.5 | Gewerk Inneneinbau |
| 100.6 | Gewerk Fahrwerk |
| 100.7 | Gewerk Einfahren |
| 100.8 | Gewerk Wagen-Fertigstellung |
| 110.1, 110.2 | Arbeitsschritte von Teilprozessen |
| 200.2 | Auswahlpunkt vor dem Gewerk Rohbau |
| 200.3 | Auswahlpunkt vor dem Gewerk Oberfläche |
| 300 | Taufpunkt, Auswahlpunkt vor dem Gewerk Inneneinbau |
| 400.2 | elektronischer Zwischenspeicher für den Teilprozeß 100.2 |
| 400.3 | elektronischer Zwischenspeicher für den Teilprozeß 100.3 |
| 400.5 | elektronischer Zwischenspeicher für den Teilprozeß 100.5 |
| 500.3 | Sortierpuffer für Fertigungsobjekte zwischen den Teilprozessen 100.2 und 100.3 |
| 500.5 | Sortierpuffer für Fertigungsobjekte zwischen den Teilprozessen 100.3 und 100.5 |
| 500.6 | Sortierpuffer für Teilsysteme |

**Patentansprüche**

1. Verfahren zur automatischen Steuerung eines Fertigungsprozesses zur Serienfertigung auftragsspezifischer Produkte, wobei

- der Fertigungsprozeß einen ersten Teilprozeß (100.1,100.2) und einen zweiten Teilprozeß (100.3,...) umfaßt,
- eine Abfolge (60) von in elektronischer Form vorliegenden Aufträgen (10.1,10.2,...) für Produkte, die im Fertigungsprozeß gefertigt werden, erzeugt wird,
- im ersten Teilprozeß (100.1,100.2) gemäß der Auftrags-Abfolge (60) eine Abfolge (70) von Fertigungsobjekten gefertigt wird,
- ein Auswahlvorgang durchgeführt wird, bei dem ein Fertigungsobjekt (20.1,20.2,...) der Fertigungsobjekt-Abfolge (70) und ein Auftrag (10.1, 10.2, ...) der Auftrags-Abfolge (60), die zueinander passen, ausgewählt werden,
- aus dem ausgewählten Fertigungsobjekt (20.1,20.2,...) im zweiten Teilprozeß (100.3,...) ein Produkt gemäß

22

des ausgewählten Auftrags (10.1,10.2,...) gefertigt wird

- und Auswahlvorgang und Produktfertigung wiederholt werden, bis für jeden Auftrag (10.1,10.2,...) der Auftrags-Abfolge (60) ein Produkt gefertigt ist,

**dadurch gekennzeichnet, daß**

ein Sortierpuffer (500.3) für Fertigungsobjekte vorgesehen ist, der eine festgelegte Höchstanzahl verfügbarer Plätze für Fertigungsobjekte besitzt,

dann, wenn der erste Auftrag der Auftrags-Abfolge (60) nicht zum ersten Fertigungsobjekt der Fertigungsobjekt-Abfolge (70) paßt,

- geprüft wird, ob für alle Fertigungsobjekte (20.1,20.2,...), die in der Fertigungsobjekt-Abfolge (70) vor einem zum ersten Auftrag passenden Fertigungsobjekt angeordnet sind, freie Plätze im Sortierpuffer (500.3) verfügbar sind,
- und dann, wenn genügend freie Plätze vorhanden sind, der erste Auftrag (10.1,10.2,...) und das passende Fertigungsobjekt (20.1,20.2,...) der Fertigungsobjekt-Abfolge (70) ausgewählt werden und alle Fertigungsobjekte (20.1,20.2,...) der Fertigungsobjekt-Abfolge (70) vor dem ausgewählten Fertigungsobjekt in den Sortierpuffer (500.3) eingestellt werden, und

dann, wenn in einem nachfolgenden Auswahlvorgang der erste Auftrag der Auftrags-Abfolge weder zu einem Fertigungsobjekt im Sortierpuffer noch zum ersten Fertigungsobjekt der Fertigungsobjekt-Abfolge paßt,

- geprüft wird, ob für alle Fertigungsobjekte (20.1,20.2,...), die in der Fertigungsobjekt-Abfolge (70) vor einem zum ersten Auftrag passenden Fertigungsobjekt angeordnet sind, freie Plätze im Sortierpuffer (500.3) verfügbar sind,
- und dann, wenn genügend freie Plätze vorhanden sind, der erste Auftrag (10.1,10.2,...) und das passende Fertigungsobjekt (20.1,20.2,...) der Fertigungsobjekt-Abfolge (70) ausgewählt werden und alle Fertigungsobjekte (20.1,20.2,...) der Fertigungsobjekt-Abfolge)70) vor dem ausgewählten Fertigungsobjekt in den Sortierpuffer (500.3) eingestellt werden.

2. Verfahren nach Anspruch 1,
   **dadurch gekennzeichnet, daß**

   - jeder Auftrag (10.1,10.2,...) Merkmale des auftragspezifisch zu fertigenden Produkts umfaßt,
   - jedes Fertigungsobjekt (20.1,20.2,...) Merkmale umfaßt, die im ersten Teilprozeß (100.1,100.2) gefertigt werden,
   - und bei der Prüfung, ob ein Fertigungsobjekt (20.1,20.2,...) und ein Auftrag (10.1,10.2,...) zueinander passen, die Fertigungsobjekt-Merkmale mit einer Teilmenge der Produkt-Merkmale verglichen werden.

3. Verfahren nach Anspruch 2,
   **dadurch gekennzeichnet, daß**
   ein Fertigungsobjekt (20.1, 20.2, ...) und ein Auftrag (1.0.1, 10.2, ...) dann als zueinander passend gewertet werden, wenn jedes Produkt-Merkmal des Auftrags, das der Teilmenge angehört, vereinbar mit allen Merkmalen des Fertigungsobjekts ist.

4. Verfahren nach Anspruch 2 oder Anspruch 3,
   **dadurch gekennzeichnet, daß**
   ein zum Vergleich herangezogenes Merkmal
   der Zeitpunkt ist, an dem das Produkt spätestens fertiggestellt sein soll.

5. Verfahren nach einem der Ansprüche 2 bis 4,
   **dadurch gekennzeichnet, daß**

   - jedes Produkt-Merkmal mit einer Gewichtung versehen ist,
   - beim Vergleich eines Fertigungsobjekts (20.1,20.2,...) mit einem Auftrag (10.1,10.2,...) mit Hilfe dieser Gewichtungen ein Grad der Übereinstimmung ermittelt wird
   - und ein Fertigungsobjekt (20.1,20.2,...) und ein Auftrag (10.1,10.2,...) dann als zueinander passend gewertet werden, wenn der Grad der Übereinstimmung eine vorgegebene Schranke erreicht oder übersteigt.

**6.** Verfahren nach einem der Ansprüche 1 bis 5,
**dadurch gekennzeichnet, daß**

dann, wenn der erste Auftrag (10.1,10.2,...) der Auftrags-Abfolge (60) zu einem Fertigungsobjekt (20.1,20.2,...) im Sortierpuffer (500.3) paßt,

Auftrag (10.1, 10.2, ...) und Fertigungsobjekt (20.1,20.2,...) ausgewählt werden und das Fertigungsobjekt (20.1,20.2,...) dem Sortierpuffer (500.3) entnommen wird.

**7.** Verfahren nach einem der Ansprüche 1 bis 5,
**dadurch gekennzeichnet, daß**

- ein zunächst leerer elektronischer Zwischenspeicher (400.3) für Aufträge erzeugt wird
- und dann, wenn der erste Auftrag der Auftrags-Abfolge (60) weder zu einem Fertigungsobjekt im Sortierpuffer (500.3) noch zum ersten Fertigungsobjekt der Fertigungsobjekt-Abfolge (70) paßt und wenn nicht genügend freie Plätze im Sortierpuffer (500.3) verfügbar sind,
- der erste Auftrag in den Zwischenspeicher (400.3) eingestellt wird.

**8.** Verfahren nach Anspruch 7,
**dadurch gekennzeichnet, daß**

bei einem Auswahlvorgang

- dann, wenn ein Auftrag im Zwischenspeicher (400.3) zu einem Fertigungsobjekt im Sortierpuffer (500.3) paßt, Auftrag und Fertigungsobjekt ausgewählt werden und der Auftrag aus dem Zwischenspeicher (400.3) und das Fertigungsobjekt aus dem Sortierpuffer (500.3) entfernt wird,
- und dann, wenn jeder Auftrag im Zwischenspeicher (400.3) weder zu einem Fertigungsobjekt im Sortierpuffer (500.3) noch zum ersten Fertigungsobjekt der Fertigungsobjekt-Abfolge (70) paßt und wenn genügend freie Plätze im Sortierpuffer (500.3) vorhanden sind, ein Auftrag im Zwischenspeicher (400.3) und ein zum Auftrag passendes Fertigungsobjekt der Fertigungsobjekt-Abfolge (70) ausgewählt werden, alle Fertigungsobjekte vor dem ausgewählten Fertigungsobjekt in den Sortierpuffer (500.3) eingestellt werden und der Auftrag aus dem Zwischenspeicher (400.3) entfernt wird.

**9.** Verfahren nach Anspruch 8,
**dadurch gekennzeichnet, daß**

- dann, wenn die Anzahl von Auswahlvorgängen, die ein Auftrag im Zwischenspeicher (400.3) verweilt, eine vorgegebene Höchstanzahl von Auswahlvorgängen erreicht oder übersteigt,
- dieser Auftrag und ein zu ihm passendes Fertigungsobjekt aus der Fertigungsobjekt-Abfolge (70) ausgewählt werden
- und das ausgewählte Fertigungsobjekt auf den ersten Platz der Fertigungsobjekt-Abfolge (70) vorgezogen wird.

**10.** Verfahren nach einem der Ansprüche 1 bis 9,
**dadurch gekennzeichnet, daß**

- ein zunächst leerer elektronischer Zwischenspeicher (400.3) für Aufträge erzeugt wird,
- dann, wenn der erste Auftrag der Auftrags-Abfolge weder zu einem Fertigungsobjekt im Sortierpuffer (500.3) noch zum ersten Fertigungsobjekt der Fertigungsobjekt-Abfolge (70) paßt,
- der erste Auftrag in den Zwischenspeicher (400.3) eingestellt wird,
- bei einem Auswahlvorgang zunächst die Aufträge im Zwischenspeicher (400.3) mit Fertigungsobjekten verglichen werden
- und dann, wenn die Anzahl von Auswahlvorgängen, die ein Auftrag im Zwischenspeicher (400.3) verweilt, eine vorgegebene Höchstanzahl von Auswahlvorgängen erreicht oder übersteigt,
- dieser Auftrag und ein zu ihm passendes Fertigungsobjekt im Sortierpuffer (500.3) oder aus der Fertigungsobjekt-Abfolge (70) ausgewählt werden
- und das ausgewählte Fertigungsobjekt auf den ersten Platz der Fertigungsobjekt-Abfolge (70) vorgezogen wird.

**11.** Verfahren nach einem der Ansprüche 1 bis 10,
**dadurch gekennzeichnet, daß**

- gemäß der Auftrags-Abfolge (60) eine Abfolge von auftragsspezifischen Teilsystemen hergestellt und im zweiten Teilprozeß (100.3,...) für die Fertigung der Produkte verwendet wird,
- der Fertigungsprozeß einen Sortierpuffer (500.6) für Teilsysteme umfaßt,
- und ein Teilsystem, das aufgrund eines Auftrags hergestellt wurde, der zurückgestellt wird, vor seiner Verwendung in einen freien Platz des Teilsysteme-Sortierpuffers (500.6) eingestellt wird.

**12.** Verfahren nach Anspruch 11,
**dadurch gekennzeichnet, daß**
der Teilsysteme-Sortierpuffer (500.6) eine festgelegte Höchstanzahl verfügbarer Plätze besitzt,
der Quotient aus

- Höchstanzahl verfügbarer Plätze des Teilsysteme-Sortierpuffers (500.6) und
- Anzahl auftragsspezifischer Teilsysteme, die im zweiten Teilprozeß für die Fertigung eines auftragsspezifischen Produkts verwendet werden,

ermittelt wird
und dann, wenn die Anzahl von Aufträgen im Zwischenspeicher (500.3) für Fertigungsobjekte den Quotienten erreicht oder übersteigt,

- dieser Auftrag und ein zu ihm passendes Fertigungsobjekt aus der Fertigungsobjekt-Abfolge (70) ausgewählt werden
- und das ausgewählte Fertigungsobjekt auf den ersten Platz der Fertigungsobjekt-Abfolge (70) vorgezogen wird.

**13.** Verfahren nach einem der Ansprüche 1 bis 12,
**dadurch gekennzeichnet, daß**
die Reihenfolge der Aufträge in der Auftrags-Abfolge (60) vor dem ersten Auswahlvorgang mit der Reihenfolge, in der die Aufträge ausgewählt werden, verglichen wird,
wobei für jeden Auftrag dessen Relativ-Position in der Auswahl-Reihenfolge im Vergleich zur Position in der Auftrags-Abfolge (60) ermittelt wird,
und aus den Relativ-Positionen aller Aufträge eine Positions-Güte des Fertigungsprozesses berechnet wird.

**14.** Verfahren nach Anspruch 13,
**dadurch gekennzeichnet, daß**
bei der Berechnung der Positions-Güte

- der größte Wert aller Relativ-Positionen,
- der kleinste Wert aller Relativ-Positionen
- und/oder der Mittelwert aller Relativ-Positionen bestimmt wird.

**15.** Verfahren nach einem der Ansprüche 1 bis 14,
**dadurch gekennzeichnet, daß**

- der Sortierpuffer (500.3) mehrere Teil-Sortierpuffer für Fertigungsobjekte umfaßt,
- vor dem Einstellen eines Fertigungsobjekts in den Sortierpuffer (500.3) ein Teil-Sortierpuffer automatisch ausgewählt und das Fertigungsobjekt in diesen eingestellt wird.

**16.** Verfahren nach Anspruch 15,
**dadurch gekennzeichnet, daß**

- eine aktuelle Bewertung jedes Teil-Sortierpuffers bezüglich eines einzustellenden Fertigungsobjekts erzeugt und für die Auswahl des Teil-Sortierpuffers verwendet wird
- und die Bewertung durch Berechnung einer der folgenden Einzel-Bewertungen oder durch Zusammenfassen mehrerer der folgenden Einzel-Bewertungen erzeugt wird:

- die aktuelle Gesamt-Anzahl der Fertigungsobjekte im Teil-Sortierpuffer,
- die aktuelle Anzahl derjenigen Fertigungsobjekte im Teil-Sortierpuffer, die in einem vorigen Auswahlvorgang ausgewählt wurden, aber noch nicht aus dem Teil-Sortierpuffer entfernt wurden,
- die aktuelle Gesamt-Anzahl derjenigen Fertigungsobjekte im Teil-Sortierpuffer, die sich durch jeweils mindestens ein Merkmal vom einzustellenden Fertigungsobjekt unterscheiden,

- der Zeitaufwand, der erforderlich ist, um das einzustellende Fertigungsobjekt in den Teil-Sortierpuffer einzustellen.

**17.** Verfahren nach einem der Ansprüche 1 bis 16,
**dadurch gekennzeichnet, daß**

- eine Referenz-Abfolge von in elektronischer Form vorliegenden Referenz-Aufträgen für Referenz-Produkte, die im Fertigungsprozeß gefertigt werden, erzeugt wird,
- im ersten Teilprozeß gemäß der Referenz-Auftrags-Abfolge eine Abfolge von Referenz-Fertigungsobjekten gefertigt wird,
- ein elektronisches Abbild der Referenz-Fertigungsobjekt-Abfolge und ein elektronisch verfügbares Modell des Sortierpuffers erzeugt werden,
- verschiedene mögliche Werte für die Höchstanzahl verfügbarer Plätze des Sortierpuffers für Fertigungsobjekte vorgegeben sind,
- für jeden der vorgegebenen möglichen Werte

- die Höchstanzahl verfügbarer Plätze des Sortierpuffer-Modells auf den Wert eingestellt wird
- und eine Simulation aller Auswahlvorgänge unter Verwendung der Referenz-Auftrags-Abfolge, des Abbildes, des Sortierpuffer-Modells und des Zwischenspeichers durchgeführt wird,

wobei ein Referenz-Fertigungsobjekt-Abbild in das Modell einstellbar ist, wenn das Modell noch einen freien Platz umfaßt,
- in Abhängigkeit von den Ergebnissen der Simulationen einer der möglichen Werte ausgewählt wird
- und für die Auswahlvorgänge der Auftrags-Abfolge ein Sortierpuffer mit dem ausgewählten Wert als Höchstanzahl verfügbarer Plätze verwendet wird.

**18.** Verfahren nach Anspruch 17,
**dadurch gekennzeichnet, daß**
für jeden der vorgegebenen möglichen Werte für die Höchstanzahl

- die Reihenfolge der Aufträge in der Referenz-Auftrags-Abfolge vor dem ersten Auswahlvorgang mit der Reihenfolge, in der die Referenz-Aufträge in der Simulation für diesen Wert ausgewählt werden, verglichen wird,

wobei für jeden Referenz-Auftrag dessen Relativ-Position in der Referenz-Auswahl-Reihenfolge im Vergleich zur Position in der Auftrags-Abfolge ermittelt wird,

- und aus den Relativ-Positionen aller Referenz-Aufträge eine Positions-Güte für diesen Wert berechnet wird

und die Auswahl des Werts in Abhängigkeit von den ermittelten Positions-Güten durchgeführt wird.

**19.** Verfahren nach Anspruch 17 oder Anspruch 18,
**dadurch gekennzeichnet, daß**

- ein zunächst leerer elektronischer Zwischenspeicher für Referenz-Aufträge erzeugt wird,
- bei einer Simulation dann, wenn der erste Referenz-Auftrag der Referenz-Abfolge zu keinem Referenz-Fertigungsobjekt-Abbild im Sortierpuffer-Modell paßt und wenn das Modell nicht genügend freie Plätze umfaßt, der erste Referenz-Auftrag in den Zwischenspeicher eingestellt wird,
- für jeden der vorgegebenen möglichen Werte ermittelt wird, wie viele Referenz-Aufträge der Referenz-Auftrags-Abfolge im Verlauf der Simulation für diesen Wert in den Zwischenspeicher eingestellt wurden,
- ein Wert ausgewählt wird, der in der Simulation zu einem Anteil von eingestellten Referenz-Aufträgen führt, der kleiner oder gleich einer vorgegebenen Schranke für den Anteil ist,
- und für die Auswahlvorgänge der Auftrags-Abfolge ein Sortierpuffer mit dem ausgewählten Wert als Höchstanzahl verfügbarer Plätze verwendet wird.

**20.** Verfahren nach einem der Ansprüche 17 bis 19,
**dadurch gekennzeichnet, daß**

- verschiedene mögliche automatisch auswertbare Vorschriften für die Prüfung, ob ein Fertigungsobjekt und ein Auftrag zueinander passen oder nicht, vorgegeben sind und
- für jeden der vorgegebenen möglichen Werte und für jede mögliche Prüfungs-Vorschrift die Simulation aller Auswahlvorgänge vorgenommen wird, wobei in der Simulation die Prüfungs-Vorschrift zum Vergleich von Referenz-Aufträgen mit Referenz-Fertigungsobjekt-Abbildern verwendet wird.

21. Verfahren nach Anspruch 20,
**dadurch gekennzeichnet, daß**

- verschiedene mögliche Teilmengen von Produkt-Merkmalen vorgegeben sind
- und für jede mögliche Teilmenge die Prüfungs-Vorschrift erzeugt und als mögliche Prüfungs-Vorschrift verwendet wird,
- die ein Fertigungsobjekt und einen Auftrag genau dann als zueinander passend wertet, wenn jedes Produkt-Merkmal des Auftrags, das der möglichen Teilmenge angehört, vereinbar mit allen Merkmalen des Fertigungsobjektes ist.

22. Verfahren nach Anspruch 17,
**dadurch gekennzeichnet, daß**

- der Sortierpuffer mehrere Teil-Sortierpuffer für Fertigungsobjekte und das Sortierpuffer-Modell mehrere Teil-Sortierpuffer-Modelle umfaßt,
- vor dem Einstellen eines Fertigungsobjekts in den Sortierpuffer ein Teil-Sortierpuffer automatisch ausgewählt und das Fertigungsobjekt in diesen eingestellt wird,

wobei mittels einer Bewertungsfunktion eine aktuelle Bewertung jedes Teil-Sortierpuffers erzeugt wird,

- verschiedene mögliche Bewertungsfunktionen vorgegeben sind,
- für jede mögliche Bewertungsfunktion eine Simulation aller Auswahlvorgänge mit Auswahl von Teil-Sortierpuffer-Modellen mittels dieser Bewertungsfunktion durchgeführt wird
- und in Abhängigkeit von den Simulations-Ergebnissen eine der möglichen Bewertungsfunktionen ausgewählt wird.

23. Verfahren nach Anspruch 22,
**dadurch gekennzeichnet, daß**
für jede mögliche Bewertungsfunktion mehrere Simulationen durchgeführt werden, in deren Verlauf mindestens ein Teil-Sortierpuffer-Modell wenigstens zeitweise deaktiviert wird.

24. Verfahren nach Anspruch 12,
**dadurch gekennzeichnet, daß**

- verschiedene mögliche Werte für die Höchstanzahl verfügbarer Plätze des Sortierpuffers für Teilsysteme vorgegeben sind,
- eine Referenz-Abfolge von in elektronischer Form vorliegenden Referenz-Aufträgen für Referenz-Produkte, die im Fertigungsprozeß gefertigt werden, erzeugt wird,
- im ersten Teilprozeß gemäß der Referenz-Auftrags-Abfolge eine Abfolge von Referenz-Fertigungsobjekten gefertigt wird,
- Auswahlvorgänge für Referenz-Aufträge und Referenz-Fertigungsobjekte so oft durchgeführt werden, bis jeder Referenz-Auftrag der Abfolge ausgewählt wurde,
- ermittelt wird, um wie viele Relativ-Positionen ein Referenz-Auftrag in der Reihenfolge, in der die Referenz-Aufträge ausgewählt werden, im Vergleich zur Position des Referenz-Auftrags in der Referenz-Auftrags-Abfolge vor dem ersten Auswahlvorgang höchstens zurückliegt,
- das Produkt aus dieser höchsten Relativ-Position und der Anzahl auftragsspezifischer Teilsysteme, die für die Fertigung eines auftragsspezifischen Produkts verwendet werden, berechnet wird
- und als Teilsysteme-Sortierpuffer ein Sortierpuffer verwendet wird, dessen Anzahl verfügbarer Plätze für Teilsysteme größer oder gleich dem Produkt ist.

25. Vorrichtung zur automatischen Steuerung eines Fertigungsprozesses zur Serienfertigung auftragsspezifischer Produkte, wobei

- der Fertigungsprozeß einen ersten Teilprozeß (100.1, 100.2) und einen zweiten Teilprozeß (100.3,...) umfaßt,
- eine Abfolge (60) von in elektronischer Form vorliegenden Aufträgen für Produkte, die im Fertigungsprozeß gefertigt werden, vorliegt,
- im ersten Teilprozeß (100.1,100.2) gemäß der Auftrags-Abfolge (60) eine Abfolge (70) von Fertigungsobjekten gefertigt wird,
- die Vorrichtung Mittel zum Durchführen eines Auswahlvorgang zur Auswahl eines Fertigungsobjekts der Fertigungsobjekt-Abfolge (70) und eines Auftrags der Auftrags-Abfolge (60), die zueinander passen, umfaßt und
- aus dem ausgewählten Fertigungsobjekt im zweiten Teilprozeß (100.3,...) ein Produkt gemäß des ausgewählten Auftrags gefertigt wird,

**dadurch gekennzeichnet, daß**
die Vorrichtung

- einen Sortierpuffer (500.3) für Fertigungsobjekte umfaßt, der eine festgelegte Höchstanzahl verfügbarer Plätze für Fertigungsobjekte besitzt,
- Mittel zum Prüfen, ob ein Fertigungsobjekt (20.1,20.2,...) der Fertigungsobjekt-Abfolge (70) und ein Auftrag (10.1,10.2,...) der Auftrags-Abfolge (60) zueinander passen,
- Mittel zum Prüfen, ob ein Fertigungsobjekt im Sortierpuffer (500.3) und ein Auftrag (10.1,10.2,...) der Auftrags-Abfolge (60) zueinander passen,
- Mittel zum Prüfen, ob für alle Fertigungsobjekte, die in der Fertigungsobjekt-Abfolge (70) vor einem zum ersten Auftrag passenden Fertigungsobjekt angeordnet sind, freie Plätze im Sortierpuffer (500.3) verfügbar sind,
- Mittel zum Einstellen eines Fertigungsobjekts (20.1,20.2,...) der Fertigungsobjekt-Abfolge (70) in den Sortierpuffer (500.3)

umfaßt und zum Ausführen folgender Schritte ausgestaltet ist:
dann, wenn der erste Auftrag der Auftrags-Abfolge (60) nicht zum ersten Fertigungsobjekt der Fertigungsobjekt-Abfolge (70) paßt,

- Prüfen, ob für alle Fertigungsobjekte (20.1,20.2,...), die in der Fertigungsobjekt-Abfolge (70) vor einem zum ersten Auftrag passenden Fertigungsobjekt angeordnet sind, freie Plätze im Sortierpuffer (500.3) verfügbar sind,
- und dann, wenn genügend freie Plätze vorhanden sind, Auswählen des ersten Auftrags und des passenden Fertigungsobjekt der Fertigungsobjekt-Abfolge (70) und Einstellen aller Fertigungsobjekte der Fertigungsobjekt-Abfolge (70) vor dem ausgewählten Fertigungsobjekt in den Sortierpuffer (500.3), und

dann, wenn in einem nachfolgenden Auswahlvorgang der erste Auftrag der Auftrags-Abfolge weder zu einem Fertigungsobjekt im Sortierpuffer (500.3) noch zum ersten Fertigungsobjekt der Fertigungsobjekt-Abfolge paßt,

- Prüfen, ob für alle Fertigungsobjekte, die in der Fertigungsobjekt-Abfolge (70) vor einem zum ersten Auftrag passenden Fertigungsobjekt angeordnet sind, freie Plätze im Sortierpuffer (500.3) verfügbar sind,
- und dann, wenn genügend freie Plätze vorhanden sind, Auswählen des ersten Auftrags und des passenden Fertigungsobjekt der Fertigungsobjekt-Abfolge (70) und Einstellen aller Fertigungsobjekte der Fertigungsobjekt-Abfolge (70) vor dem ausgewählten Fertigungsobjekt in den Sortierpuffer (500.3).

26. Vorrichtung nach Anspruch 25,
**dadurch gekennzeichnet, daß**
die Vorrichtung

- einen elektronischen Zwischenspeicher (400.3) für Aufträge,
- Mittel zum Einstellen eines Auftrags (10.1,10.2,...) in den Zwischenspeicher (400.3),
- Mittel zum Prüfen, ob ein Fertigungsobjekt (20.1,20.2,...) der Fertigungsobjekt-Abfolge (70) und ein Auftrag (10.1,10.2,...) im Zwischenspeicher (400.3) zueinander passen,
- und Mittel zum Entfernen eines Auftrags (10.1,10.2,...) aus dem Zwischenspeicher (400.3)

umfaßt.

27. Vorrichtung nach Anspruch 25 oder Anspruch 26,
**dadurch gekennzeichnet, daß**
die Vorrichtung

- einen Sortierpuffer (500.6) für Teilsysteme, die gemäß der Auftrags-Abfolge (60) hergestellt und im zweiten Teilprozeß (100.3,...) für die Fertigung der Produkte verwendet werden,
- und Mittel zum Einstellen eines solchen Teilsystems in den Teilsysteme-Sortierpuffer (500.6)

umfaßt.

**28.** Vorrichtung nach einem der Ansprüche 25 bis 27,
**dadurch gekennzeichnet, daß**

- der Sortierpuffer mehrere Teil-Sortierpuffer für Fertigungsobjekte umfaßt
- und die Vorrichtung

- Mittel zum automatischen Auswählen eines Teil-Sortierpuffers
- und Mittel zum Einstellen eines Fertigungsobjekts in einen ausgewählten Teil-Sortierpuffer

umfaßt.

**29.** Vorrichtung nach Anspruch 28,
**dadurch gekennzeichnet, daß**
die Mittel zum automatischen Auswählen eines Teil-Sortierpuffers

- Mittel zur Erzeugung einer aktuellen Bewertung jedes Teil-Sortierpuffers bezüglich eines einzustellenden Fertigungsobjekts
- und Mittel zum Verwenden der Bewertungen für das Auswählen eines Teil-Sortierpuffers

umfassen.

## Claims

**1.** Method for the automatic control of a manufacturing process for the mass production of order-specific products, such that

- the manufacturing process comprises a first part-process (100.1, 100.2) and a second part-process (100.3, ...),
- a sequence (60) of orders (10.1, 10.2, ...) existing in electronic form, for products to be made in the manufacturing process, is produced,
- in the first part-process (100.1, 100.2), in accordance with the order sequence (60) a sequence (70) of production objects is prepared,
- a selection process is carried out, in which a production object (20.1, 20.2, ...) of the production object sequence (70) and an order (10.1, 10.2, ...) of the order sequence (60) that match one another are selected,
- in the second part-process (100.3, ...) a product according to the selected order (10.1, 10.2, ...) is made from the selected production object (20.1, 20.2, ...),

- and the selection process and product production are repeated until a product has been made for each order (10.1, 10.2, ...) of the order sequence (60),

**characterised in that**
a sorting buffer (500.3) for production objects is provided, which has a determined maximum number of available places for production objects,
and if the first order of the order sequence (60) does not match the first production object in the production order sequence (70),

- it is tested whether, for all the production objects (20.1, 20.2, ...) arranged in the production object sequence (70) ahead of a production object that matches the first order, free places are available in the sorting buffer (500.3),
- and if enough free places are present, the first order (10.1, 10.2, ...) and the matching production object (20.1, 20.2, ...) from the production object sequence (70) are selected and all the production objects (20.1, 20.2, ...) in the production object sequence (70) ahead of the selected production object are placed in the sorting buffer (500.3), and

if in a subsequent selection process the first order of the order sequence does not match either a production object in the sorting buffer or the first production object of the production object sequence,

- it is tested whether, for all the production objects (20.1, 20.2, ...) arranged in the production object sequence (70) ahead of a production object that matches the first order, free places are available in the sorting buffer (500.3),
- and if there are enough free places, the first order (10.1, 10.2, ...) and the matching production object (20.1, 20.2, ...) from the production object sequence (70) are selected and all the production objects (20.1, 20.2, ...) in the production object sequence (70) ahead of the selected production object are placed in the sorting buffer (500.3).

2. Method according to Claim 1,
**characterised in that**

- each order (10.1, 10.2, ...) comprises characteristics of the order-specific product to be made,
- each production object (20.1, 20.2, ...) comprises characteristics produced in the first part-process (100.1, 100.2),
- and in the test of whether a production object (20.1, 20.2, ...) and an order (10.1, 10.2, ...) match one another, the characteristics of the production object are compared with a part-quantity of the product characteristics.

3. Method according to Claim 2,
**characterised in that**
a production object (20.1, 20.2, ...) and an order (10.1, 10.2, ...) are assessed as matching one another, when every product characteristic of the order that belongs to the said part-quantity, is consistent with all the characteristics of the production object.

4. Method according to Claims 2 or 3,
**characterised in that**
one characteristic involved in the comparison is the latest time by which the product should be completed.

5. Method according to any of Claims 2 to 4,
**characterised in that**

- each product characteristic is given a weighting,
- when comparing a production object (20.1, 20.2, ...) with an order (10.1, 10.2, ...) a level of agreement is determined with the aid of this weighting,
- and a production object (20.1, 20.2, ...) and an order (10.1, 10.2, ...) are assessed as matching one another if the level of agreement reaches or exceeds a specified threshold.

6. Method according to any of Claims 1 to 5,
**characterised in that**
if the first order (10.1, 10.2, ...) in the order sequence (60) matches a production object (20.1, 20.2, ...) in the sorting buffer (500.3),
the order (10.1, 10.2, ...) and the production object (20.1, 20.2, ...) are selected and the production object (20.1, 20.2, ...) is extracted from the sorting buffer (500.3).

7. Method according to any of Claims 1 to 5,
**characterised in that**

- an initially empty electronic intermediate store (400.3) for orders is produced,
- and if the first order in the order sequence (60) matches neither a production object in the sorting buffer (500.3) nor the first production object in the production object sequence (70), and if there are not enough free places available in the sorting buffer (500.3),
- the said first order is placed in the intermediate store (400.3).

8. Method according to Claim 7,
**characterised in that**
in a selection process

- when an order in the intermediate store (400.3) matches a production object in the sorting buffer (500.3), the order and the production order are selected and the order is extracted from the intermediate store (400.3) and the production object from the sorting buffer (500.3),

- and if no order in the intermediate store (400.3) either matches a production object in the sorting buffer (500.3) or the first production object in the production object sequence (70) and if enough free places are available in the sorting buffer (500.3), an order in the intermediate store (400.3) and a production object in the production order sequence (70) that matches the order are selected, all production objects ahead of the selected production object are placed in the sorting buffer (500.3), and the order is removed from the intermediate store (400.3).

9. Method according to Claim 8,
   **characterised in that**

   - when the number of selection processes that have kept back an order in the intermediate store (400.3) reaches or exceeds a specified maximum number of selection processes,
   - this order and a production object from the production object sequence (70) that matches it are selected,
   - and the selected production object is promoted to first place in the production order sequence (70).

10. Method according to any of Claims 1 to 9,
    **characterised in that**

    - an initially empty electronic intermediate store (400.3) for orders is produced,
    - and if the first order in the order sequence matches neither a production object in the sorting buffer (500.3) nor the first production object in the production object sequence (70),
    - the first order is placed in the intermediate store (400.3),
    - in a selection process the orders in the intermediate store (400.3) are first compared with production objects,
    - and if the number of selection processes that have kept back an order in the intermediate store (400.3) reaches or exceeds a specified maximum number of selection processes,
    - that order and a matching production object in the sorting buffer (500.3) or from the production object sequence (70) are selected,
    - and the selected production object is promoted to first place in the production object sequence (70).

11. Method according to any of Claims 1 to 10,
    **characterised in that**

    - in accordance with the order sequence (60) a sequence of order-specific part-systems is prepared and used in the second part-process (100.3, ...) for the manufacture of the products,
    - the manufacturing process comprises a sorting buffer (500.6) for the part-systems,
    - and a part-system produced by virtue of an order that has been put back, is placed in a free place of the part-system sorting buffer (500.6) before being used.

12. Method according to Claim 11,
    **characterised in that**
    the part-system sorting buffer (500.6) has a determined maximum number of available places,
    the quotient of

    - the maximum number of available places in the part-system sorting buffer (500.6) and
    - the number of order-specific part-systems used in the second part-process for the manufacture of an order-specific product

    is determined,
    and if the number of orders in the intermediate store (500.3) for production objects reaches or exceeds the said quotient,

    - this order and a matching production object from the production object sequence (70) are selected,
    - and the selected production object is promoted to first place in the production object sequence (70).

13. Method according to any of Claims 1 to 12,
    **characterised in that**

the sequence of orders in the order sequence (60) before the first selection process is compared with the sequence in which the orders are selected,

so that for each order, its relative position in the selection sequence is determined by comparison with its position in the order sequence (60),

and from the relative positions of all the orders a positional quality of the manufacturing process is calculated.

**14.** Method according to Claim 13,
**characterised in that**
in calculating the positional quality

- the highest value of all the relative positions,
- the lowest value of all the relative positions,
- and/or the mean value of all the relative positions is determined.

**15.** Method according to any of Claims 1 to 14,
**characterised in that**

- the sorting buffer (500.3) comprises a plurality of partial sorting buffers for production objects,
- before a production object is placed in the sorting buffer (500.3) a partial sorting buffer is selected automatically and the production object is placed in the latter.

**16.** Method according to Claim 15,
**characterised in that**

- a current evaluation of each partial sorting buffer in relation to a production object to be placed is produced and used for the selection of the partial sorting buffer,
- and the evaluation is effected by calculating one of the following individual evaluations or by combining more than one of the following individual evaluations:

- the current total number of production objects in the partial sorting buffer,
- the current number of production objects in the partial sorting buffer which were selected in a previous selection process but which have not yet been removed from the partial sorting buffer,
- the current total number of those production objects in the partial sorting buffer which differ from the production object to be placed by at least one representative characteristic,
- the time required in order to place the production object to be placed in the partial sorting buffer.

**17.** Method according to any of Claims 1 to 16,
**characterised in that**

- a reference sequence of reference orders existing in electronic form for reference products made in the manufacturing process is produced,
- in the first part-process a sequence of reference production objects is made in accordance with the reference order sequence,
- an electronic image of the reference production object sequence and an electronically available model of the sorting buffer are produced,
- various possible values for the maximum number of available sorting buffer places for production objects are specified,
- for each of the specified possible values

- the maximum number of available places in the sorting buffer model is set to the value in question,
- and a simulation of all the selection processes is carried out using the reference order sequence, and the images of the sorting buffer model and the intermediate store, such that a reference production object can be placed in the model if the model still has a free place,

- as a function of the simulation results one of the said possible values is selected,
- and for the selection processes of the order sequence a sorting buffer with the selected value as its maximum number of available places is used.

**18.** Method according to Claim 17,
**characterised in that**
for each of the specified maximum number values

- the sequence of orders in the reference order sequence before the first selection process is compared with the sequence in which the reference orders are selected in the simulation for that value, so that for each reference order its relative position in the reference selection sequence is determined compared with its position in the order sequence,
- and from the relative positions of all the reference orders a position quality for the said value is calculated,

and the value is selected as a function of the positional quality determined.

**19.** Method according to Claims 17 or 18,
**characterised in that**

- an initially empty electronic intermediate store for reference orders is produced,
- in a simulation, if the first reference order of the reference sequence does not match any reference production object image in the sorting buffer model and if the model does not have enough free places, the reference order is placed in the intermediate store,
- for each of the specified possible values it is determined how many reference orders of the reference order sequence were placed in the intermediate store during the course of the simulation for the value in question,
- a value is selected which, in the simulation, leads to a proportion of placed reference orders which is smaller than or equal to a specified limit for the said proportion,
- and for the selection processes of the order sequence a sorting buffer is used, which has the selected value as its maximum number of available places.

**20.** Method according to any of Claims 17 to 19,
**characterised in that**

- various possible automatically evaluable prescriptions for testing whether a production object and an order match one another or not are specified,
- for each of the specified possible values and for each possible testing prescription the simulation of all the selection processes is carried out, and the testing prescription for comparing reference orders with reference production object images is used in the simulation.

**21.** Method according to Claim 20,
**characterised in that**

- various possible part-quantities of product characteristics are specified,
- and for each possible part-quantity the testing prescription is produced and used as a possible testing prescription,
- which assesses a production object and an order as matching one another exactly if every product characteristic of the order belonging to the possible part-quantity is consistent with all the characteristics of the production object.

**22.** Method according to Claim 17,
**characterised in that**

- the sorting buffer comprises a plurality of partial sorting buffers for production objects and the sorting buffer model comprises a plurality of partial sorting buffer models,
- before a production object is placed in the sorting buffer, a partial sorting buffer is selected automatically and the production object is placed in it, an evaluation function being used to produce a current evaluation of each partial sorting buffer,
- various possible evaluation functions are specified,
- for each possible evaluation function a simulation of all the selection processes with a choice of partial sorting buffer models is carried out by means of the said evaluation function,
- and as a function of the simulation results one of the possible evaluation functions is chosen.

**23.** Method according to Claim 22,
**characterised in that**
for each possible evaluation function several simulations are carried out, during the course of which at least one partial sorting buffer model is at least temporarily deactivated.

**24.** Method according to Claim 12,
**characterised in that**

- various possible values are specified for the maximum number of available places in the sorting buffer for part-systems,
- a reference sequence of reference orders existing in electronic form, for reference products made in the manufacturing process, is produced,
- in the first part-process according to the reference order sequence, a sequence of reference production objects is made,
- selection processes for reference orders and reference production objects are carried out as many times as necessary for every reference order in the sequence to be selected,
- the greatest number of relative positions by which a reference order in the sequence in which the reference orders are selected, is behind compared with the position of the reference order in the reference order sequence before the first selection process, is determined,
- the product of this maximum relative position and the number of order-specific part-systems used for the manufacture of an order-specific product is calculated,
- and as the partial sorting buffer a sorting buffer is used, whose number of places available for part-systems is greater than or equal to the said product.

**25.** Device for the automatic control of a manufacturing process for the mass production of order-specific products, such that

- the manufacturing process comprises a first part-process (100.1, 100.2) and a second part-process (100.3, ...),
- there is a sequence (60) of orders in electronic form for products to be made in the manufacturing process,
- in the first part-process (100.1, 100.2), in accordance with the order sequence (60) a sequence (70) of production objects is prepared,
- the device comprises means for carrying out a selection process for selecting a production object from the production object sequence (70) and an order from the order sequence (60) that match one another, and
- in the second part-process (100.3, ...) a product in accordance with the selected order is made from the selected production object,

**characterised in that**
the device comprises

- a sorting buffer (500.3) for production objects, which has a determined maximum number of available places for production objects,
- means for testing whether a production object (20.1, 20.2, ...) from the production object sequence (70) and an order (10.1, 10.2, ...) from the order sequence (60) match one another,
- means for testing whether a production object in the sorting buffer (500.3) and an order (10.1, 10.2, ...) in the order sequence (60) match one another,
- means for testing whether free places are available in the sorting buffer (500.3) for all the production objects which, in the production object sequence (70), are arranged ahead of a production object that matches the first order,
- means for placing a production object (20.1, 20.2, ...) from the production object sequence (70) into the sorting buffer (500.3),

and is designed to carry out the following steps:
if the first order from the order sequence (60) does not match the first production object from the production object sequence (70),

- testing whether free places are available in the sorting buffer (500.3) for all the production objects (20.1, 20.2, ...) in the production object sequence (70) arranged ahead of a production object that matches the first order,
- and if enough free places are present, selecting the first order and the matching production object from the production object sequence (70) and placing all the production objects of the production order sequence that are ahead of the selected production object into the sorting buffer (500.3), and

if, in a subsequent selection process, the first order in the order sequence does not match either any production object in the sorting buffer (500.3) or the first production object in the production object sequence,

- testing whether free places are available in the sorting buffer (500.3) for all the production objects in the production object sequence (70) arranged ahead of a production object that matches the first order,
- and if enough free places are available, selecting the first order and the matching production object from the production object sequence (70) and placing all the production objects that come ahead of the selected production object in the production object sequence (70) into the sorting buffer (500.3).

26. Device according to Claim 25,
**characterised in that**
the device comprises

- an electronic intermediate store (400.3) for orders,
- means for placing an order (10.2, 10.2, ...) in the intermediate store (400.3),
- means for testing whether a production object (20.1, 20.2, ...) in the production object sequence (70) and an order (10.1, 10.2, ...) in the intermediate store (400.3) match one another,
- and means for extracting an order (10.1, 10.2, ...) from the intermediate store (400.3).

27. Device according to Claims 25 or 26,
**characterised in that**
the device comprises

- a sorting buffer (500.6) for part-systems which, in accordance with the order sequence (60), are made and used in the second part-process (100.3, ...) for manufacturing the product,
- and means for placing such a part-system in the part-system sorting buffer (500.6).

28. Device according to any of Claims 25 to 27,
**characterised in that**

- the sorting buffer comprises a plurality of partial sorting buffers for production objects,
- and the device comprises

    - means for the automatic selection of a partial sorting buffer
    - and means for placing a production object in a selected partial sorting buffer.

29. Device according to Claim 28,
**characterised in that**
the means for automatically selecting a partial sorting buffer comprise

- means for producing a current evaluation of every partial sorting buffer in relation to a production object to be placed,
- and means for using the evaluations for the selection of a partial sorting buffer.

**Revendications**

1. Procédé pour la commande automatique d'un processus de fabrication pour la fabrication en série de produits spécifiques à une commande,

- le processus de fabrication comprenant un premier processus partiel (100.1, 100.2) et un second processus partiel (100.3, ...),
- une succession (60) de commandes (10.1, 10.2, ...) présentes sous forme électronique étant générée pour des produits qui sont fabriqués dans le processus de fabrication,
- une succession (70) d'objets de fabrication étant fabriquée dans le premier processus partiel (100.1, 100.2) selon la succession de commandes (60),

- une opération de sélection étant effectuée, lors des laquelle un objet de fabrication (20.1, 20.2, ...) de la succession d'objets de fabrication (70) et une commande (10.1, 10.2, ...) de la succession de commandes (60), qui vont ensemble, sont sélectionnés,

- un produit selon la commande (10.1, 10.2, ...) sélectionnée étant fabriqué à partir de l'objet de fabrication (20.1, 20.2, ...) sélectionné dans le second processus partiel (100.3, ...)

- et l'opération de sélection et la fabrication du produit étant répétées jusqu'à ce qu'un produit soit fabriqué pour chaque commande (10.1, 10.2, ...) de la succession de commandes,

**caractérisé en ce que**

un tampon de tri (500.3) est prévu pour des objets de fabrication, lesquels présentent un nombre maximum fixé d'emplacements disponibles pour des objets de fabrication, dans les cas où la première commande de la succession de commandes (60) ne va pas avec le premier objet de fabrication de la succession d'objets de fabrication (70),

- on vérifie si, pour tous les objets de fabrication (20.1, 20.2, ...), qui sont disposés dans la succession d'objets de fabrication (70) avant un objet de fabrication allant avec la première commande, des emplacements libres sont disponibles dans le tampon de tri (500.3),

- et dans les cas où un nombre suffisant d'emplacements libres est présent, la première commande (10.1, 10.2, ...) et l'objet de fabrication (20.1, 20.2, ...) approprié de la succession d'objet de fabrication (70) sont sélectionnés et tous les objets de fabrication (20.1, 20.2, ...) de la succession d'objets de fabrication (70) sont placés avant l'objet de fabrication sélectionné dans le tampon de tri (500.3), et dans les cas où, dans une opération de sélection consécutive, la première commande de la succession de commandes ne va ni avec un objet de fabrication dans le tampon de tri ni avec le premier objet de fabrication de la succession d'objets de fabrication,

- on vérifie si, pour tous les objets de fabrication (20.1, 20.2, ...), qui sont disposés dans la succession d'objets de fabrication (70), avant un objet de fabrication allant avec la première commande, des emplacements libres sont disponibles dans le tampon de tri (500.3), et

- dans les cas où un nombre suffisant d'emplacements libres est présent, la première commande (10.1, 10.2, ...) et l'objet de fabrication (20.1, 20.2, ...) appropriés de la succession d'objet de fabrication (70) sont sélectionnés et tous les objets de fabrication (20.1, 20.2, ...) de la succession d'objets de fabrication (70) sont placés avant l'objet de fabrication sélectionné dans le tampon de tri (500.3).

2. Procédé selon la revendication 1,
   **caractérisé en ce que**

   - chaque commande (10.1, 10.2, ...) comprend des caractéristiques du produit à fabriquer de façon spécifique à la commande,
   - chaque objet de fabrication (20.1, 20.2, ...) comprend des caractéristiques fabriquées dans le premier processus partiel (100.1, 100.2),
   - et lors du contrôle pour savoir si un objet de fabrication (20.1, 20.2, ...) et une commande (10.1, 10.2, ...) vont ensemble, les caractéristiques de l'objet de fabrication sont comparées avec une quantité partielle des caractéristiques du produit.

3. Procédé selon la revendication 2,
   **caractérisé en ce que**
   un objet de fabrication (20.1, 20.2, ...) et une commande (10.1, 10.2, ...) sont évalués comme allant l'un avec l'autre, lorsque chaque caractéristique du produit de la commande, qui fait partie de la quantité partielle, peut être associée avec toutes les caractéristiques de l'objet de fabrication.

4. Procédé selon la revendication 2 ou la revendication 3,
   **caractérisé en ce que**
   une caractéristique utilisée pour la comparaison est le moment où le produit doit être fabriqué au plus tard.

5. Procédé selon l'une quelconque des revendications 2 à 4,
   **caractérisé en ce que**

   - chaque caractéristique de produit est dotée d'une pondération
   - lors de la comparaison d'un objet de fabrication (20.1, 20.2, ...) avec une commande (10.1, 10.2, ...), on détermine un degré de concordance à l'aide de ces pondérations
- et un objet de fabrication (20.1, 20.2, ...) et une commande (10.1, 10.2, ...) sont considérés comme allant l'un avec l'autre lorsque le degré de concordance atteint ou dépasse une limite prédéfinie.

6. Procédé selon l'une quelconque des revendications 1 à 5,
**caractérisé en ce que**
dans les cas où la première commande (10.1, 10.2, ...) de la succession de commandes (60) va avec un objet de fabrication (20.1, 20.2, ...) dans le tampon de tri (500.3),
la commande (10.1, 10.2, ...) et l'objet de fabrication (20.1, 20.2, ...) sont sélectionnés et l'objet de fabrication (20.1, 20.2, ...) est enlevé du tampon de tri (500.3).

7. Procédé selon l'une quelconque des revendications 1 à 5,
**caractérisé en ce que**

- une mémoire intermédiaire (400.3) électronique d'abord vide est générée pour des commandes
- et dans les cas où la première commande de la succession de commandes (60) ne va ni avec un objet de fabrication dans le tampon de tri (500.3) ni avec le premier objet de fabrication de la succession d'objets de fabrication (70) et dans le cas où un nombre insuffisant d'emplacements libres est disponible dans le tampon de tri (500.3)
- la première commande est placée dans la mémoire intermédiaire (400.3).

8. Procédé selon la revendication 7,
**caractérisé en ce que**,
lors d'une opération de sélection

- dans les cas où une commande dans la mémoire intermédiaire (400.3) va avec un objet de fabrication dans le tampon de tri (500.3), la commande et l'objet de fabrication sont sélectionnés et la commande et l'objet de fabrication sont enlevés respectivement de la mémoire intermédiaire (400.3) et du tampon de tri (500.3),
- et dans les cas où chaque commande dans la mémoire intermédiaire (400.3) ne va ni avec un objet de fabrication dans le tampon de tri (500.3) ni avec le premier objet de fabrication de la succession d'objets de fabrication (70) et lorsqu'on dispose d'un nombre suffisant d'emplacements libres dans le tampon de tri (500.3), une commande dans la mémoire intermédiaire (400.3) et un objet de fabrication, allant avec la commande, de la succession d'objets de fabrication (70) sont sélectionnés, tous les objets de fabrication sont placés avant l'objet de fabrication sélectionné dans le tampon de tri (500.3) et la commande est enlevée de la mémoire intermédiaire (400.3).

9. Procédé selon la revendication 8,
**caractérisé en ce que**,

- dans les cas où le nombre d'opérations de sélection, pendant lequel une commande reste dans la mémoire intermédiaire (400.3), atteint ou dépasse un nombre maximum prédéfini d'opérations de sélection,
- cette commande et un objet de fabrication allant avec celle-ci provenant de la succession d'objets de fabrication (70) sont sélectionnés
- et l'objet de fabrication sélectionné est avancé à la première place de la succession d'objets de fabrication (70).

10. Procédé selon l'une quelconque des revendications 1 à 9,
**caractérisé en ce que**

- une mémoire intermédiaire (400.3) électronique d'abord vide est générée pour des commandes,
- dans les cas où la première commande de la succession de commandes va ni avec un objet de fabrication dans le tampon de tri (500.3) ni avec le premier objet de fabrication de la succession d'objets de fabrication (70),
- la première commande est placée dans la mémoire intermédiaire (400.3),
- lors d'une opération de sélection, les commandes dans la mémoire intermédiaire (400.3) sont comparées d'abord avec des objets de fabrication
- et dans les cas où le nombre d'opérations de sélection, pendant lequel une commande reste dans la mémoire intermédiaire (400.3), atteint ou dépasse un nombre maximum prédéfini d'opérations de sélection,
- cette commande et un objet de fabrication allant avec elle sont sélectionnés dans le tampon de tri (500.3) ou à partir de la succession d'objets de fabrication (70)

- et l'objet de fabrication sélectionné est avancé sur la première place de la succession d'objets de fabrication (70).

**11.** Procédé selon l'une quelconque des revendications 1 à 10,
**caractérisé en ce que**

- une succession de systèmes partiels spécifiques à la commande est fabriquée selon la succession de commandes (60) et est utilisée dans le second processus partiel (100.3, ...) pour la fabrication des produits,
- le processus de fabrication comprend un tampon de tri (500.6) pour des systèmes partiels,
- et un système partiel, qui a été fabriqué sur la base d'une commande qui est reculée,
- est placé avant son utilisation dans un emplacement libre du tampon de tri de systèmes partiels (500.6).

**12.** Procédé selon la revendication 11,
**caractérisé en ce que**
le tampon de tri de systèmes partiels (500.6) présente un nombre maximum défini d'emplacements disponibles, le quotient résultant

- du nombre maximum d'emplacements disponibles du tampon de tri de systèmes partiels (500.6) et
- du nombre de systèmes partiels spécifiques à la commande, qui sont utilisés dans le second processus partiel pour la fabrication d'un produit spécifique à la commande
- est déterminé

et dans les cas où le nombre de commandes dans la mémoire intermédiaire (500.3) pour des objets de fabrication atteint ou dépasse le quotient,

- cette commande et un objet de fabrication approprié à celles-ci provenant de la succession d'objets de fabrication (70) sont sélectionnés
- et l'objet de fabrication sélectionné est avancé sur le premier emplacement de la succession d'objets de fabrication (70).

**13.** Procédé selon l'une quelconque des revendications 1 à 12
**caractérisé en ce que**
l'ordre de succession des commandes dans la succession de commandes (60) est comparé avant la première opération de sélection avec l'ordre de succession dans lequel les commandes sont sélectionnées,
pour chaque commande, sa position relative dans l'ordre de succession de sélection étant comparée par rapport à la position dans la succession de commandes (60),
et une qualité de position du processus de fabrication étant calculée à partir des positions relatives de toutes les commandes.

**14.** Procédé selon la revendication 13,
**caractérisé en ce que**
lors du calcul de la qualité de position

- la plus grande valeur de toutes les positions relatives,
- la plus petite valeur de toutes les positions relatives,
- et/ou la valeur moyenne de toutes les positions relatives sont déterminées.

**15.** Procédé selon l'une quelconque des revendications 1 à 14,
**caractérisé en ce que**

- le tampon de tri (500.3) comprend plusieurs tampons de tri partiels pour des objets de fabrication,
- avant le placement d'un objet de fabrication dans le tampon de tri (500.3), un tampon de tri partiel est sélectionné automatiquement et l'objet de fabrication est placé dans celui-ci.

**16.** Procédé selon la revendication 15,
**caractérisé en ce que**,

- une évaluation actuelle de chaque tampon de tri partiel est générée en ce qui concerne un objet de fabrication à placer et est utilisée pour le choix du tampon de tri partiel,

- et l'évaluation est générée par le calcul de l'une des évaluations individuelles suivantes ou par le regroupement de plusieurs des évaluations individuelles suivantes :
- le nombre total actuel des objets de fabrication dans le tampon de tri partiel,
- le nombre actuel des objets de fabrication dans le tampon de tri partiel, qui ont été sélectionnés dans une opération de sélection préalable, mais n'ont pas encore été enlevés du tampon de tri partiel.
- le nombre total actuel des objets de fabrication dans le tampon de tri partiel, qui se différencient par respectivement au moins une caractéristique de l'objet de fabrication à placer,
- la dépense de temps qui est nécessaire pour placer l'objet de fabrication à placer dans le tampon de tri partiel.

**17.** Procédé selon l'une quelconque des revendications 1 à 16,
**caractérisé en ce que**

- une succession de référence de commande de référence présentes sous une forme électronique est générée pour des produits de référence qui sont fabriqués dans le processus de fabrication,
- une succession d'objets de fabrication de référence est fabriquée dans le premier processus partiel selon la succession de commandes de référence,
- une représentation électronique de la succession d'objets de fabrication de référence et un modèle électroniquement disponible du tampon de tri sont générés,
- différentes valeurs possibles sont prédéfinies pour le nombre maximum d'emplacements disponibles du tampon de tri pour des objets de fabrication,
- pour chacune des valeurs possibles prédéfinies
- le nombre maximum d'emplacements disponibles du modèle de tampon de tri est placé sur la valeur
- et une simulation de toutes les opérations de sélection est effectuée avec l'utilisation de la succession de commandes de référence, de la représentation, du modèle de tampon de tri et de la mémoire intermédiaire,
- une représentation de l'objet de fabrication de référence étant placée dans le modèle lorsque le modèle comprend encore un emplacement libre,
- l'une des valeurs possibles étant sélectionnée en fonction des résultats des simulations
- et un tampon de tri avec la valeur sélectionnée comme nombre maximum d'emplacements disponibles étant utilisé pour les opérations de sélection de la succession de commandes.

**18.** Procédé selon la revendication 17,
**caractérisé en ce que**
pour chacune des valeurs possibles prédéfinies pour le nombre maximum

- l'ordre de succession des commandes dans la succession de commandes de référence est comparé avant la première opération de sélection avec l'ordre de succession dans laquelle les commandes de référence sont sélectionnées dans la simulation pour cette valeur, pour chaque commande de référence, sa position relative dans l'ordre de succession de sélection de référence étant déterminée par rapport à la position dans l'ordre de succession de commande,
- et une qualité de position étant calculée pour cette valeur à partir des positions relatives de toutes les commandes de référence et la sélection de la valeur étant effectuée en fonction des qualités de position déterminées.

**19.** Procédé selon la revendication 17 ou la revendication 18,
**caractérisé en ce que**

- une mémoire intermédiaire électronique d'abord libre est générée pour des commandes de référence,
- lors d'une simulation, dans les cas où la première commande de référence de la succession de référence ne va avec aucune représentation d'objet de fabrication de référence dans le modèle de tampon de tri et lorsque le modèle ne comprend pas suffisamment d'emplacements libres, la première commande de référence est placée dans la mémoire intermédiaire,
- pour chacune des valeurs possibles prédéfinies, on détermine combien de commandes référence de la succession de commandes de référence ont été placées au cours de la simulation pour cette valeur dans la mémoire intermédiaire,
- on sélectionne une valeur qui aboutit dans la simulation à une fraction de commandes de référence placées, qui est inférieure ou égale à une limite prédéfinie pour cette fraction,
- et pour les opérations de sélection de la succession de commandes, un tampon de tri est utilisé avec la valeur sélectionnée comme nombre maximum d'emplacements disponibles.

**20.** Procédé selon l'une quelconque des revendications 17 à 19,
**caractérisé en ce que**
différentes prescriptions possibles analysables automatiquement sont prédéfinies pour vérifier si un objet de fabrication et une commande vont ensemble ou non et
la simulation de toutes les opérations de sélection est effectuée pour chacune des valeurs possibles prédéfinies et pour chaque restriction de test possible, la prescription de test étant utilisée dans la simulation pour comparer des commandes de référence avec des représentations d'objet de fabrication de référence.

**21.** Procédé selon la revendication 20,
**caractérisé en ce que**

- différentes quantités partielles possibles de caractéristiques de produit sont prédéfinies,
- et la prescription de test est générée pour chaque quantité partielle possible et est utilisée comme prescription de test possible,
- laquelle évalue un objet de fabrication et une commande comme allant ensemble précisément dans les cas où chaque caractéristique de produit de la commande, qui fait partie de la quantité partielle possible, peut être associée avec toutes les caractéristiques de l'objet de fabrication.

**22.** Procédé selon la revendication 17,
**caractérisé en ce que**

- le tampon de tri comprend plusieurs tampons de tri partiels pour des objets de fabrication et le modèle de tampon de tri partiel plusieurs modèles de tampon de tri partiel,
- avant le placement d'un objet de fabrication dans le tampon de tri, un tampon de tri partiel est sélectionné automatiquement et l'objet de fabrication est placé dans ce tampon, une évaluation actuelle de chaque tampon de tri partiel étant générée au moyen d'une fonction d'évaluation,
- différentes fonctions d'évaluation possibles sont prédéfinies,
- pour chaque fonction d'évaluation possible, une simulation de toutes les opérations de sélection est effectuée avec la sélection de modèles de tampon de tri partiel au moyen de cette fonction d'évaluation,
- et l'une des fonctions d'évaluation possibles est sélectionnée en fonction des résultats de la simulation.

**23.** Procédé selon la revendication 22,
**caractérisé en ce que**
pour chaque fonction d'évaluation possible, plusieurs simulations sont effectuées, au cours desquelles au moins un modèle de tampon de tri partiel est désactivé au moins temporairement.

**24.** Procédé selon la revendication 12,
**caractérisé en ce que**

- différentes valeurs possibles sont prédéfinies pour le nombre maximum d'emplacements libres du tampon de tri pour des systèmes partiels,
- une succession de référence de commandes de référence présentes sous forme électronique est générée pour des produits de référence qui sont fabriqués dans un processus de fabrication,
- dans le premier processus partiel, une succession d'objets de fabrication de référence est fabriquée selon la succession de commandes de référence,
- des opérations de sélection sont effectuées pour des commandes de référence et des objets de fabrication de référence jusqu'à ce que chaque commande de référence de la succession ait été choisie,
- on détermine de combien de positions relatives une commande de référence recule au maximum dans l'ordre de succession, dans laquelle les commandes de référence sont sélectionnées, par rapport à la position de la commande de référence dans la succession de commandes de référence avant la première opération de sélection,
- le produit résultant de cette position relative et du nombre de systèmes partiels spécifiques à la commande, qui sont utilisés pour la fabrication d'un produit spécifique à la commande, est calculé,

et comme tampon de tri de système partiel, on utilise un tampon de tri dont le nombre d'emplacements disponibles pour des systèmes partiels est supérieur ou égal au produit.

**25.** Dispositif pour la commande automatique d'un processus de fabrication pour la fabrication en série de produits spécifiques à la commande,

- le processus de fabrication comprenant un premier processus partiel (100.1, 100.2) et un second processus partiel (100.3,...),
- une succession (60) de commandes présentes sous forme électronique pour des produits, qui sont fabriqués dans le processus de fabrication, étant présente
- une succession (100.1, 100.2) d'objets de fabrication étant fabriquée dans le premier processus partiel (100.1, 10.2) selon la succession de commandes (60),
- le dispositif comprenant des moyens pour l'exécution d'une opération de sélection pour la sélection d'un objet de fabrication de la succession d'objets de fabrication (70) et d'une commande de la succession de commandes (60), qui vont ensemble, et
- un produit selon la commande sélectionnée est fabriqué à partir de l'objet de fabrication sélectionné dans le second processus partiel (100.3, ...),

**caractérisé en ce que**
le dispositif

- comprend un tampon de tri (500.3) pour des objets de fabrication qui présente un nombre maximum fixé d'emplacements disponibles pour des objets de fabrication,
- des moyens pour vérifier si un objet de fabrication (20.1, 20.2, ...) de la succession d'objets de fabrication (70) et une commande (10.1, 10.2, ...) de la succession de commandes (60) vont ensemble
- des moyens pour vérifier si un objet de fabrication dans le tampon de tri (500.3) et une commande (10.1, 10.2, ...) de la succession de commandes (60) vont ensemble,
- des moyens pour vérifier si, pour tous les objets de fabrication qui sont attribués dans la succession d'objets de fabrication (70) avant un objet de fabrication allant avec la première commande, des emplacements libres sont disponibles dans le tampon de tri (500.3),
- des moyens pour placer un objet de fabrication (20.1, 20.2, ...) de la succession d'objets de fabrication (70) dans le tampon de tri (500.3),

et est conçu pour exécuter les étapes suivantes :
dans les cas où la première commande de la succession de commandes (60) ne va pas avec le premier objet de fabrication de la succession d'objets de fabrication (70),

- vérifier si des emplacements libres sont disponibles dans le tampon de tri (70) pour tous les objets de fabrication (20.1, 20.2,...) qui sont disposés dans la succession d'objets de fabrication (70) avant un objet de fabrication allant avec la première commande,

et dans les cas où un nombre suffisant d'emplacements libres est présent, sélection de la première commande et de l'objet de fabrication approprié de la succession d'objets de fabrication (70) et placement de tous les objets de fabrication de la succession d'objets de fabrication (70) avant l'objet de fabrication sélectionné dans le tampon de tri (500.3), et
dans les cas où, dans une opération de sélection consécutive, la première commande de la succession de commande ne va ni avec un objet de fabrication dans le tampon de tri (500.3) ni avec le premier objet de fabrication de la succession d'objets de fabrication,

- vérifier si les emplacements libres sont disponibles dans le tampon de tri (500.3) pour tous les objets de fabrication qui sont disposés dans la succession d'objets de fabrication (70) avant un objet de fabrication allant avec la première commande,
- et dans les cas où l'on a suffisamment d'emplacements libres, sélection de la première commande et de l'objet de fabrication approprié de la succession d'objets de fabrication (70) et placement de tous les objets de fabrication de la succession d'objets de fabrication (70) avant l'objet de fabrication sélectionné dans le tampon de tri (500.3).

**26.** Dispositif selon la revendication 25,
**caractérisé en ce que** le dispositif comprend

- une mémoire intermédiaire (400.3) électronique pour des commandes,
- des moyens pour le placement d'une commande (10.1, 10.2, ...), dans la mémoire intermédiaire (400.3),
- des moyens pour vérifier si un objet de fabrication (20.1, 20.2, ...) de la succession d'objets de fabrication (70) et une commande (10.1, 10.2, ...) vont ensemble dans la mémoire intermédiaire (400.3),
- et des moyens pour enlever une commande (10.1, 10.2, ...) de la mémoire intermédiaire (400.3).

**27.** Dispositif selon la revendication 25 ou la revendication 26,
**caractérisé en ce que**
le dispositif comprend

- un tampon de tri (500.6) pour des systèmes partiels qui sont fabriqués selon la succession de commandes (60) et sont utilisés dans le second processus partiel (100.3, ...) pour la fabrication des produits,
- et des moyens pour placer un tel système partiel dans le tampon de tri de systèmes partiels (500.6).

**28.** Dispositif selon l'une quelconque des revendications 25 à 27,
**caractérisé en ce que**
le tampon de tri comprend plusieurs tampons de tri partiels pour des objets de fabrication
et le dispositif comprend

- des moyens pour la sélection automatique d'un tampon de tri partiel
- et des moyens pour le placement d'un objet de fabrication dans un tampon de tri partiel sélectionné.

**29.** Dispositif selon la revendication 28,
**caractérisé en ce que**
les moyens pour la sélection automatique d'un tampon de tri partiel comprennent

- des moyens pour générer une évaluation actuelle de chaque tampon de tri partiel concernant un objet de fabrication à placer
- et des moyens pour utiliser les évaluations pour la sélection d'un tampon de tri partiel.

Fig. 1

EP 1 616 227 B1

Fig. 2

44

Fig. 3

Fig. 4

EP 1 616 227 B1

11.11  11.10  11.9  11.8  11.7  11.6  11.5  11.4  11.3  11.2  11.1

50

400.3

10.7  ①

60

10.12  10.11  10.10  10.9  10.8  10.5  10.6  10.4  10.3  10.2  10.1

20.13  20.12  20.11  20.10  20.9  20.7  20.3  20.2  20.4  20.1

70

500.3  20.6  20.5  20.8

Fig. 5

Fig. 6

Fig. 7

Fig. 8

Anzahl

Relativ-Position

Fig. 9

Fig. 10

Fig. 11